# EUROPÄISCHE PATENTSCHRIFT

(11) **EP 0 641 677 B1**
(45) Veröffentlichungstag und Bekanntmachung des Hinweises auf die Patenterteilung: **08.01.1997**
(21) Anmeldenummer: 94113708.5
(22) Anmeldetag: 01.09.1994
(51) Int. Cl.: B60B 3/14

(54) **Einheitsradsystem für Strassenfahrzeuge**
Unitary wheel system for road vehicles
Système unitaire de roue pour véhicules routier

(30) Priorität: 02.09.1993 DE 4329661
(43) Veröffentlichungstag der Anmeldung: 08.03.1995
(73) Patentinhaber: Höffken, Rüdiger, D-58439 Attendorn (DE)
(72) Erfinder: Höffken, Rüdiger, D-58439 Attendorn (DE)
(74) Vertreter: Kern, Wolfgang, Dipl.-Ing.

(56) Entgegenhaltungen:
- EP-A- 0 523 018
- DE-A- 4 023 912
- DE-U- 9 005 110
- DE-U- 9 307 180
- DE-U- 9 313 244
- GB-A- 2 132 572
- US-A- 5 211 448

## Beschreibung

Die Erfindung betrifft ein Einheitsradsystem für Straßenfahrzeuge, insbesondere Personenkraftwagen, nach dem Oberbegriff der Ansprüche 1, 7 oder 9.

Heutzutage sind die PKW-Radhersteller weltweit gezwungen, eine Vielzahl von Rädern zu fertigen und auf Lager zu halten, die sich im Hinblick auf die Felgenabmessungen, insbesondere was deren Durchmesser und Breite anbelangt, zur Befriedigung vielfältiger Kundenwünsche und Erfüllung technischer Erfordernisse stark unterscheiden. Damit ist der Fertigungsaufwand - und dies betrifft insbesondere Leichtmetallräder, da diese im zunehmenden Maße aus Gewichtsersparnisgründen verlangt werden - sowie der Aufwand für die Lagerhaltung beträchtlich und verteuert dementsprechend den Automobilpreis.

Ein Einheitsradsystem mit den Merkmalen des Oberbegriffs des Anspruchs 1 ist aus der DE-A1-40 23 912 bekannt. Bei diesem Einheitsradsystem ist zwar die Verwendung unterschiedlicher Adapter angegeben, doch ist nicht erkennbar, daß ein und dieselbe Radfelge an Radnaben mit unterschiedlichen Lochkreisdurchmessern bzw. Radhabendurchmessern befestigt werden kann. Ein Einheitsradsystem mit den Merkmalen des Oberbegriffs des Anspruchs 7 ist aus der DE-U1-90 05 110 bekannt. Bei diesem Einheitsradsystem ist die Radfelge mittels eines Anschlußteils sowie eines austauschbaren Adapterteils mit der Radnabe verbindbar.

Ein Einheitsradsystem mit den Merkmalen des Oberbegriffs des Anspruchs 9 ist ebenfalls aus der vorgenannten DE-A1-40 23 912 bekannt.

Die Aufgabe der Erfindung besteht darin, ein Einheitsradsystem insbesondere für Personenkraftwagen zu schaffen, das ein einziges Leichtmetallrad zur Grundlage hat, welches sich mit wenigen Zusatzelementen an praktisch jedem PKW verwenden läßt, der einen Lochkreisdurchmesser von 98 - 120 mm hat, und zwar unabhängig davon, ob es sich um eine 4- oder 5-Loch-Anbindung handelt und ob das Rad bzw. die Radfelge mit Radschrauben oder einer Zentralverschlußmutter an der Fahrzeugachsnabe bzw. Bremsscheibe oder Bremstrommel angeschraubt wird. Das zu schaffende Einheitsradsystem soll in diesem Zusammenhang so geartet sein, daß seine einzelnen Bestandteile vielseitiger verwendbar sind.

Diese Aufgabe wird erfindungsgemäß durch ein Einheitsradsystem mit den Merkmalen des Anspruchs 1, durch ein Einheitsradsystem mit den Merkmalen des Anspruchs 7 sowie durch ein Einheitsradsystem mit den Merkmalen des Anspruchs 9 gelöst.

Der Erfindungsgedanke beruht somit darauf, "gleiche" Räder herzustellen, die mit Zwischenstücken an verschiedene Fahrzeuge angebaut werden können und so ausgelegt sind, daß sozusagen nur ein Radtyp pro Durchmesser und Breite produziert wird, der immer die gleichen Abmessungen hat. Die Anpassung an die Verschraubungen an die unterschiedlichen Achsnaben der einzelnen Fahrzeugtypen sowie die Berücksichtigung geeigneter Spurweiten wird durch maßliche Veränderungen und durch entsprechende Nabenadapterflanschdicken erreicht.

Demgemäß ergeben sich vorteilhafte Ausgestaltungen der Erfindung, die in den Unteransprüchen gekennzeichnet sind.

So läßt sich die der Fahrzeugnabe zugewandte Rückseite der Radfelge mit vier zentrisch angeordneten Löchern zur Aufnahme von vier den Nabenadaptern befestigenden Zentierbundschrauben bzw. von vier den Nabenadapter befestigenden Stehbolzen und Zentrierbundmuttern versehen, entsprechend also einer Vierlochausführung, oder auch mit fünf solchen zentrisch angeordneten Löchern, entsprechend einer Fünflochausführung.

Des weiteren besteht die vorteilhafte Möglichkeit, die der Fahrzeugachsnabe zugewandte Rückseite der Radfelge gleichzeitig mit vier und mit fünf zentrisch angeordneten Löchern auszustatten, die auf demselben Lochkreis liegen und zur Aufnahme von den Nabenadapter an der Fahrzeugachsnabe befestigenden Zentrierbundschrauben bzw. Stehbolzen und Zentrierbundmuttern dienen.

Der sich durch die Radfelge hindurch erstreckende zylindrische Teil des Nabenadapters ist bei einer Ausführungsform der Erfindung ein Hohlzylinder, auf den die Zentralverschlußmutter aufschraubbar ist und dessen hinteres Ende zur Umschließung der Fettkappe der Fahrzeugachsnabe konisch erweitert ist und einen Befestigungsflansch aufweist und dessen vorderes Ende einen Außendurchmesser besitzt, der etwa dem Innendurchmesser der zentrischen Radfelgenbohrung entspricht, durch die sich der Nabenadapter erstreckt.

Bei der Verwendung einer Zentralverschlußmutter kann der sich durch die Radfelge erstreckende zylindrische Teil des Nabenadapters auch so ausgebildet sein, daß er sich an seinem vorderen Ende zapfenförmig verjüngt, wobei dann auf diesen verjüngten, mit einem Außengewinde versehenen Zapfen die Zentralverschlußmutter aufschraubbar ist, die auf einer in die Öffnung der Radfelgenbohrung eingelegten Scheibe sitzt, wobei sich an das vordere zapfenförmige Ende ein sich in Richtung auf das hintere Ende des Nabenadapters erweiternder Konus anschließt, der die Fettkappe umschließt und einen Befestigungsflansch trägt.

Zwecks Mittenzentrierung des Nabenadapters und damit der Radfelge in bezug auf die Fahrzeugachsnabe bzw. Bremsscheibe oder Bremstrommel hat es sich besonders bewährt, zwischen der Fahrzeugachsnabe und dem Nabenadapter einen Distanzring anzuordnen. Mit Hilfe von variablen Innendurchmessern des Distanzrings läßt sich somit eine Anpassung an die verschiedenen Achsstummeldurchmesser der einzelnen Kraftfahrzeugtypen erreichen. die Distanzringsitze in den Nabenadaptern haben dabei immer die gleichen Abmessungen, so daß der Maßausgleich bzw. die Anpassung an sich ändernde Fahrzeugachsnabendurchmesser mit Hilfe entsprechender Wanddicken dieser Distanzringe erfolgt.

Eine alternative Lösung der genannten Erfindungsaufgabe kennzeichnet sich durch eine Radfelge, insbesondere aus Leichtmetall, mit einem Nabenadapter, durch den die Radfelge mittels eines Zentrierelements und wenigstens zweier Radschrauben an der Fahrzeugachsnabe bzw. der Bremsscheibe oder Bremstrommel befestigbar ist. In diesem Fall wird also zur Befestigung des Rades keine Zentralverschlußmutter verwendet sondern die üblichen Radschrauben, die von außen durch die Felge hindurchgreifen. Dabei hat sich besonders bewährt, als Zentrierelement wenigstens eine sich durch den Nabenadapter hindurcherstreckende und in die Fahrzeugachsnabe einschraubbare Zentrierbundschraube zu benutzen, deren Kopf in einem Blindloch auf der der Fahrzeugachsnabe zugewandten Rückseite der Radfelge sitzt.

Eine andere konstruktive Variante sieht vor, daß der Nabenadapter von der Vorderseite der Radfelge in die zentrische Öffnung der Radfelge einsetzbar ist und in dieser Öffnung mit einem Paßstift als Zentrierelement festlegbar ist um mit Hilfe zweier Radschrauben, die sich durch Öffnungen im Nabenadapter hindurcherstrecken, zur Befestigung der Radfelge mit der Fahrzeugachsnabe verschraubbar ist. Zu diesem Zweck kann der Nabenadapter auf seiner Vorderseite einen Flansch aufweisen, der in eine entsprechende Vertiefung der Radfelgennabe einsetzbar ist.

In Anlehnung an eine vorteilhafte Ausgestaltung des Erfindungsvorschlags gemäß der ersten angegebenen Lösung läßt sich auch im vorliegenden Fall die Radfelge auf ihrer Vorderseite mit fünf Durchgangslöchern für Radschrauben und auf ihrer Rückseite mit fünf Blindlöchern für Zentrierbundschrauben versehen.

Auch hat es sich bewährt, den Nabenadapter mit fünf zentrisch angeordneten Durchgangsbohrungen zur Aufnahme von Radschrauben sowie mit fünf zentrisch angeordneten Durchgangsbohrungen zur Aufnahme von Paßstiften zu versehen.

Im übrigen wird bei der oben geschilderten alternativen Lösung der Erfindungsaufgabe für eine erforderliche Mittenzentrierung des Nabenadapters ebenfalls ein Distanzring verwendet, dessen Außendurchmesser für verschiedene Einbaufälle konstant bleibt, dessen Innendurchmesser jedoch in Anpassung an unterschiedliche Achsstummeldurchmesser variiert. Diese Distanzringe können aus Kunststoff oder Metall bestehen.

Die Erfindung wird nachfolgend anhand der in der Zeichnung dargestellten Ausführungsbeispiele näher erläutert. In der Zeichnung zeigen:
- **Fig. 1 und Fig. 2**: die Schnittansicht und Draufsicht einer Einheitsradfelge in Vierlochausführung,
- **Fig. 3 und Fig. 4**: die Schnittansicht und Draufsicht einer Einheitsradfelge in Fünflochausführung,
- **Fig. 5 und Fig. 6**: die Schnittansicht und Draufsicht einer Einheitsradfelge in kombinierter Vier-Fünflochausführung,
- **Fig. 7**: die Schnittansicht und Draufsicht eines Nabenadapters in Vierlochausführung für eine Zentralverschlußmutter,
- **Fig. 8**: die Schnittansicht und Draufsicht eines Nabenadapters in Fünflochausführung für gleichzeitig zwei Lochkreise für eine Zentralverschlußmutter,
- **Fig. 9**: die Schnittansicht und Draufsicht eines Nabenadapters in Fünflochausführung für eine Zentralverschlußmutter,
- **Fig. 10 und Fig. 11**: die Schnittansicht und Draufsicht einer Zusammenbaudarstellung eines Einheitsrades in Vierlochausführung mit Zentralverschlußmutter,
- **Fig. 12 und Fig. 13**: die Schnittansicht und Draufsicht einer Zusammenbaudarstellung eines Einheitsrades in Fünflochausführung mit Zentralverschlußmutter,
- **Fig. 14 und Fig. 15**: die Schnittansicht und Draufsicht einer Zusammenbaudarstellung eines Einheitsrades in Vierlochausführung mit Zentrierbundschrauben und Zentralverschlußmutter,
- **Fig. 16 und Fig. 17**: die Schnittansicht und Draufsicht einer Zusammenbaudarstellung eines Einheitsrades in kombinierter Vier-Fünflochausführung mit Zentralverschlußmutter bei benutzter Fünflochausführung mit Zentrierbundmuttern,
- **Fig. 18**: die Explosionsdarstellung eines Einheitsrades der in den Fig. 16 und Fig. 17 gezeigten Art,
- **Fig. 19**: die geschnittene Zusammenbaudarstellung eines Einheitsrades mit Zentralverschlußmutter und Zentrierbundschrauben,
- **Fig. 20**: die Explosionsdarstellung eines Einheitsrades mit Zentralverschlußmutter und Zentrierbundmuttern
- **Fig. 21**: die geschnittene Zusammenbaudarstellung eines Einheitsrades mit Zentralverschlußmutter und Zentrierbundmuttern,
- **Fig. 22**: die Frontansicht eines Einheitsrades mit einer ersten Ausführungsform des Zentralverschlusses,
- **Fig. 23**: die Frontansicht eines Einheitsrades mit einer zweiten Ausführungsform des Zentralverschlusses,
- **Fig. 24 und Fig. 25**: die Schnittansicht und Draufsicht einer Zusammenbaudarstellung eines Einheitsrades in kombinierter Vier-Fünflochausführung mit Zentralverschlußmutter und Maschinenschrauben und Zentrierpaßstiften bei der Benutzung der Vierlochausführung,
- **Fig. 26 und Fig. 27**: die Schnittansicht und Draufsicht einer Zusammenbaudarstellung eines Einheitsrades in kombinierter Vier-Fünflochausführung mit Zentralverschlußmutter und Maschinenschrauben und Zentrierpaßstiften bei der Benutzung der Fünflochausführung,
- **Fig. 28**: eine geschnittene Explosionsdarstellung des Einheitsrades mit Zentralverschlußmutter, Maschinenschrauben und Zentrierpaßstiften,
- **Fig. 29**: die Schnittansicht und Draufsicht eines Nabenadapters in Vierlochausführung für Zentralverschlußmutter,
- **Fig. 30**: die Schnittansicht und Draufsicht eines Nabenadapters in Vierlochausführung mit vier Paßstiftlöchern für Zentralverschlußmutter,
- **Fig. 31**: die geschnittene Zusammenbaudarstellung eines Einheitsrades mit Zentralverschlußmutter und Zentrierbundmuttern,
- **Fig. 32 und Fig. 33**: die geschnittene Zusammenbaudarstellung und Draufsicht eines Einheitsrades in kombinierter Vier-Fünflochausführung mit Zentralverschluß und Zentrierbundmuttern bei benutzter Vierlochausführung,
- **Fig. 34 und Fig. 35**: die geschnittene Zusammenbaudarstellung und Draufsicht eines Einheitsrades in kombinierter Vier-Fünflochausführung mit Zentralverschluß und Zentrierbundmuttern bei benutzter Fünflochausführung,
- **Fig. 36**: die geschnittene Explosionsdarstellung eines Einheitsrades mit Zentralverschlußmutter und Zentrierbundmuttern,
- **Fig. 37 und Fig. 38**: die Schnittansicht und Draufsicht eines Nabenadapters ohne Zentralverschlußmutter in Vierlochausführung,
- **Fig. 39 und Fig. 40**: die geschnittene Zusammenbaudarstellung und Draufsicht eines Einheitsrades in Fünflochausführung mit Nabenadapter ohne Zentralverschlußmutter, mit Zentrierbundschrauben und Radschrauben,
- **Fig. 41**: die geschnittene Explosionsdarstellung eines Einheitsrades it Nabenadapter ohne Zentralverschlußschraube, mit Zentrierbundschrauben und Radschrauben,
- **Fig. 42**: die Frontansicht eines Einheitsrades mit Nabenadapter ohne Zentralverschlußmutter, mit Radschrauben,
- **Fig. 43 und Fig. 44**: die Schnittansicht und Draufsicht eines Nabenadapters für Verwendung von Paßstiften und Radschrauben,
- **Fig. 45 und Fig. 46**: die geschnittene Zusammenbaudarstellung und Draufsicht eines Einheitsrades mit Nabenadapter der Fig. 43 und Fig. 44 sowie Paßstift und Radschrauben.

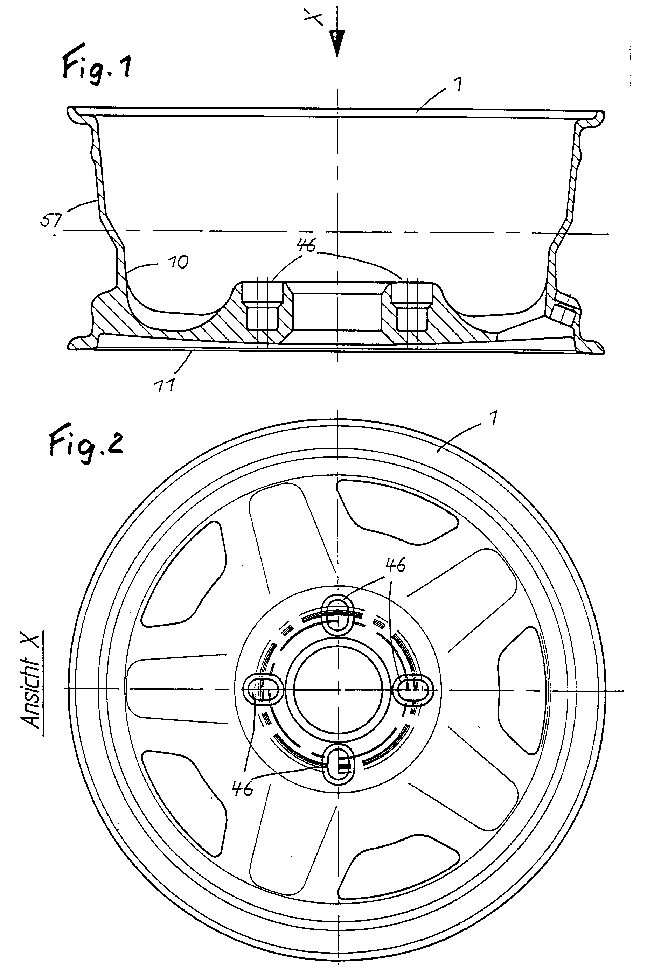

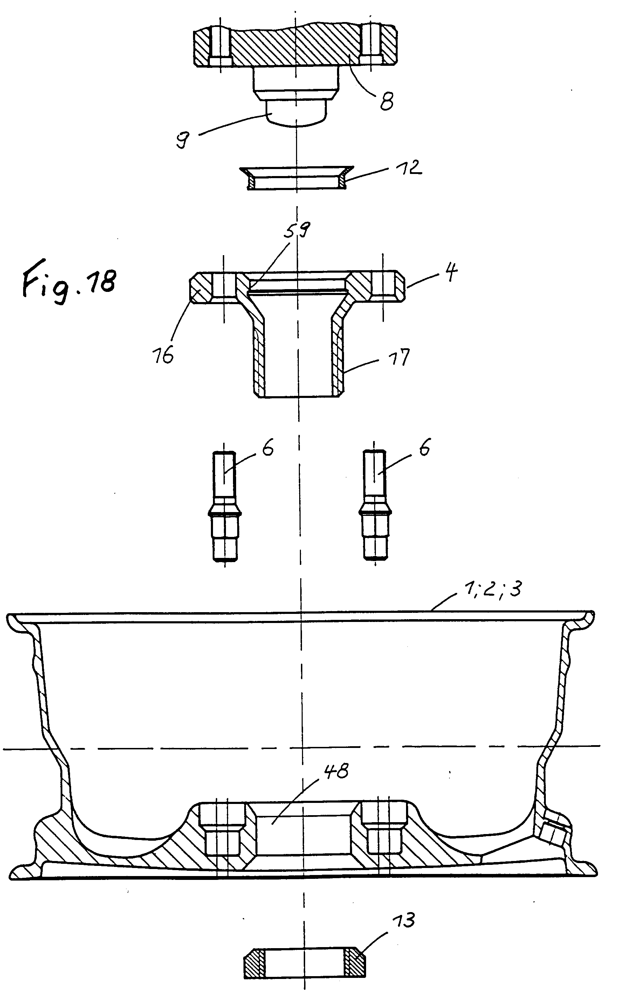

In den **Figuren 1 und 2** ist eine Leichtmetallfelge 1 für eine Ausführungsform des Einheitsradsystems dargestellt, die in bekannter Weise auf dem Felgenbett 57 einen Pkw-Reifen aufnimmt. Die Felge weist auf ihrer Rückseite 10 vier in einheitlichem Winkelabstand auf einem Lochkreis angeordnete Blindlöcher 46 auf die zur Aufnahme der Köpfe von Zentrierbundschrauben 6 dienen, wie sie in **Fig. 18** dargestellt sind.

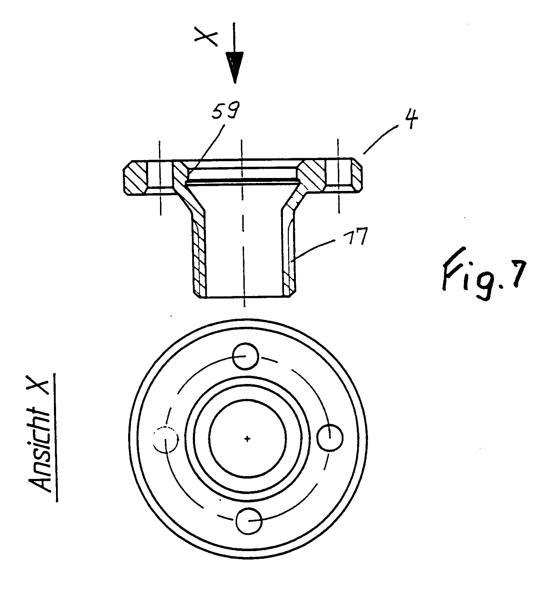

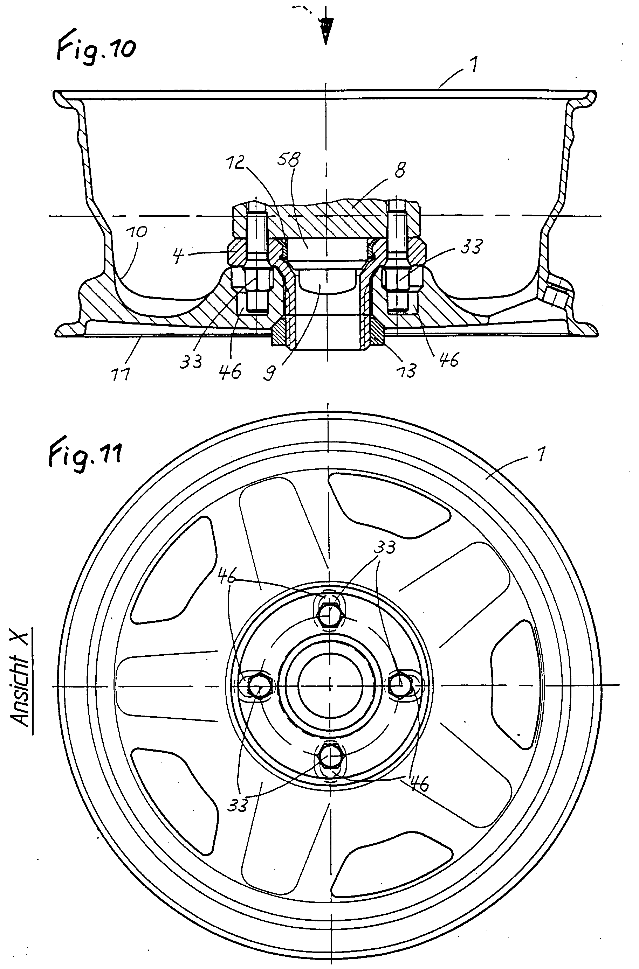

Zur Befestigung der Felge 1 an der in den **Figuren 10 und 18** teilweise gezeigten Fahrzeugachsnabe 8 dient ein Nabenadapter 4 der in **Fig. 7** dargestellten Konstruktion in Verbindung mit einem in **Fig. 18** gezeigten Distanzstück 12 und einer aus den **Figuren 10 und 18** ersichtlichen Zentralverschlußmutter 13.

Der Nabenadapter 4 weist einen sich durch die zentrische Radfelgenbohrung 48 erstreckenden Hohlzylinder 17 auf, der ein Außengewinde trägt sowie an seinem hinteren, mit der Fahrzeugachsnabe bzw. Bremsscheibe oder Bremstrommel 8 in Berührung tretenden Teil einen Ringflansch 16. Die Bohrung des Hohlzylinders erweitert sich in etwa konisch im Bereich des Ringflansches 16, um die Achsnabe 58 mit der an ihrem vorderen ende befindlichen Fettkappe 9 mit Abstand zu umschließen und für den Distanzring 12 einen Sitz 59 zu bilden. Der Abstand zwischen dieser erweiterten Bohrung und dem Umfang der Achsnabe 58 wird durch das Distanzstück 12 überbrückt.

Der Außendurchmesser des Hohlzylinders 17 entspricht in etwa dem Durchmesser der Radfelgenbohrung 48, und auf das vordere Ende des Hohlzylinders ist die Zentralverschlußmutter 13 aufgeschraubt.

Dieses System bietet u. a. den Vorteil, für eine Vielzahl von Durchmessern der Achsnaben 58 mit nur einer Nabenadaptergröße auszukommen, da der Zwischenraum zwischen dem Achsnabenumfang und der Bohrung des Adapters mit den scheibenförmigen Distanzsrücken entsprechender Größe bzw. Dicke ausgefüllt werden kann. Somit ist es dem Fahrzeugbesitzer möglich, beim Wechsel seines Fahrzeugs, beispielsweise Neukauf eines anderen Typs, seinen zusätzlichen Rädersatz, der heutzutage beispielsweise für die Winterbereifung schon fast üblich ist, durch Montage von zusätzlichen Distanzscheiben zwischen Nabenadapter und Achsnabe an die geänderten Einbauverhältnisse des neuen Fahrzeugs anzupassen, somit können Spurweiten und entsprechende Einpreßtiefen der Räder variiert werden. Wenn die Bremsen es erfordern sollten, können diese Distanzringe, die aus Metall oder aber auch aus Kunststoff oder anderen geeigneten Materialien bestehen können, auch für vergrößerten Freigang sorgen. Dabei ist vorteilhaft, daß der Außendurchmesser der Distanzringe 12 im wesentlichen konstant gehalten werden kann und nur ihr Innendurchmesser sich in Anpassung an unterschiedliche Achsnabendurchmesser ändert.

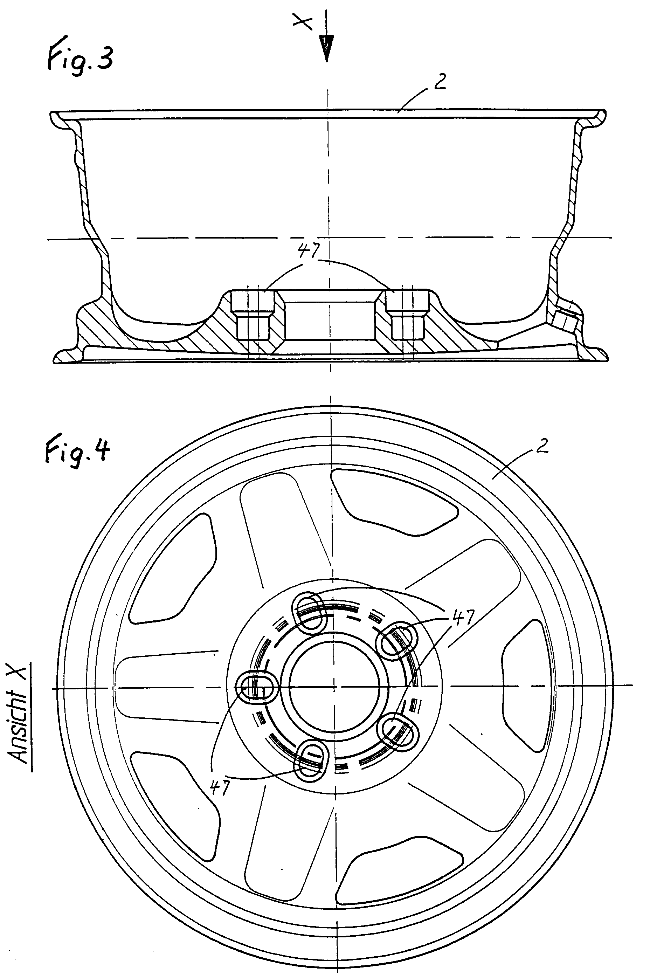

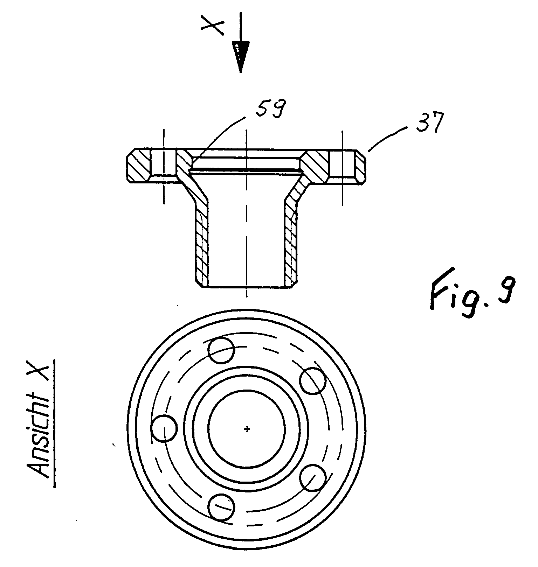

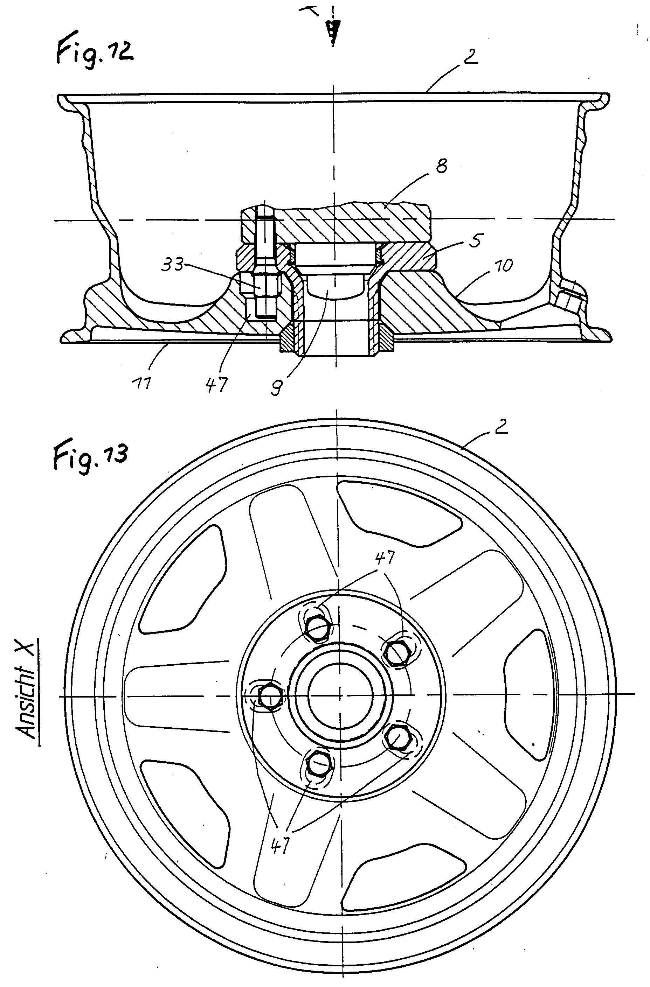

Während die Verwendung des Distanzringes 12 bereits zu einer Mittenzentrierung des Nabenadapters 4 in bezug auf die Fahrzeugachsnabe bzw. Bremsscheibe oder Bremstrommel führt, läßt sich die Felge 1 und damit das Rad auf der Achsnabe mit Hilfe von Zentrierbundschrauben 6, 33 zentrieren, von denen bei der in den **Figuren 1, 2, 7, 10, 11, 18** gezeigten Ausführungsform vier Stück Verwendung finden, deren Köpfe in den Langlöchern 46 sitzen und bei der in den **Figuren 3, 4, 9, 12, 13** gezeigten Ausführungsform des Einheitsradsystems, die ansonsten mit der erstgenannten Ausführungsform identisch ist, fünf Zentrierbundschrauben 6, 33, die in den fünf Langlöchern der Radfelge 2 sitzen.

Der Nabenadapter 37 dieser zweiten für eine Fünf-Loch-Anbindung vorgesehenen Ausführungsform erfüllt denselben Zweck wie der Nabenadapter 4, der für eine Vier-Loch-Anbindung vorgesehen ist, indem auch er dazu dient, ein Leichtmetallrad an jeden PKW zu schrauben, der einen Lochkreisdurchmesser von 98 bis 120 mm hat.

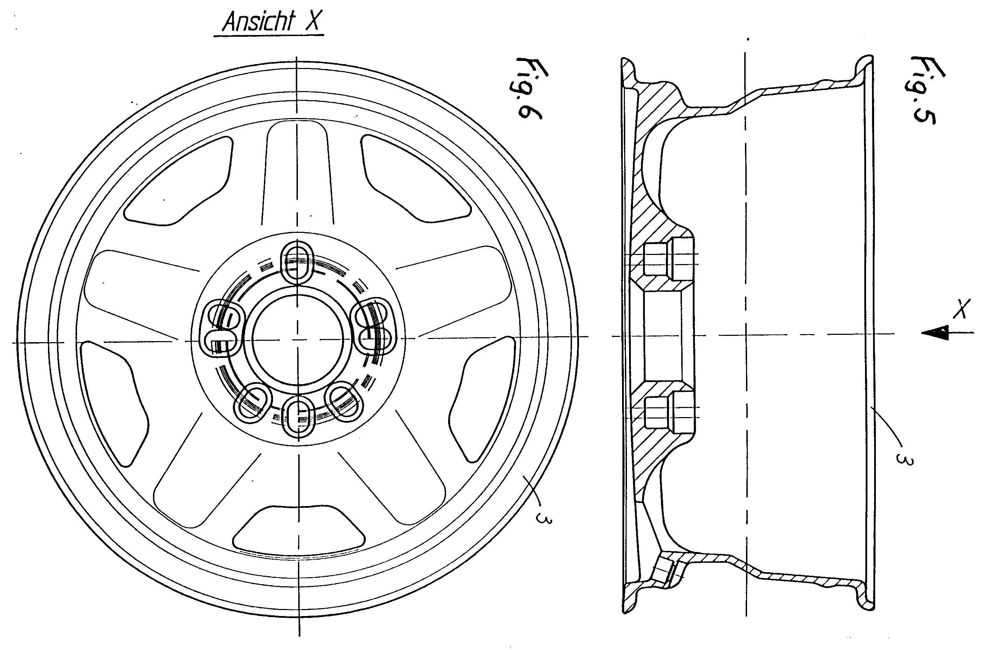

Die oben beschriebenen Nabenadapter 4, 37, auf die eine Zentralverschlußmutter aufschraubbar ist und die für eine Vier-Loch-Ausführung oder eine Fünf-Loch-Ausführung geeignet sind, werden ergänzt durch die in den **Figuren 5 und 6** dargestellte Ausführungsform des Einheitsradsystems, die grundsätzlich den beiden erstgenannten Ausführungsformen entspricht, jedoch eine kombinierte Vier-Fünf-Loch-Anordung zeigt, wie aus **Fig. 6** ersichtlich ist, so daß diese Radfelge sowohl für Pkws verwendbar ist, die in der Achsnabe nur vier Befestigungslöcher aufweisen als auch für solche, die fünf Befestigungslöcher besitzen.

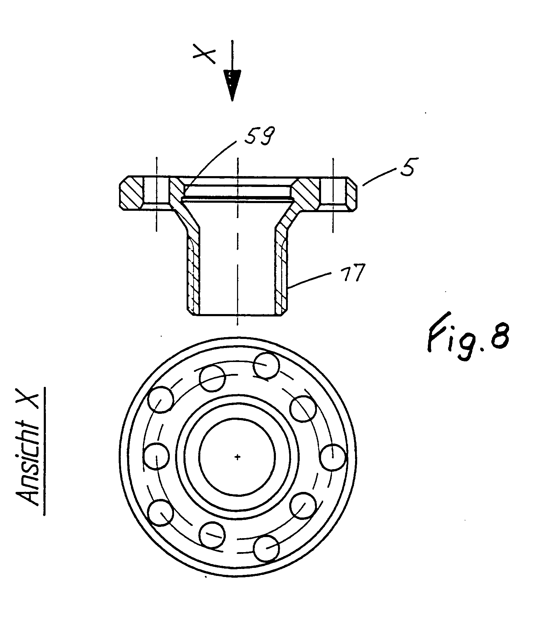

Desweiteren ist die Möglichkeit gegeben, den Nabenadapter 5, wie aus **Fig. 8** ersichtlich, als Fünf-Loch-Ausführung mit gleichzeitig zwei Lochkreisen auszubilden, um dadurch eine Anpassung an unterschiedliche Lochkreisdurchmesser der Achsnabe zu erreichen.

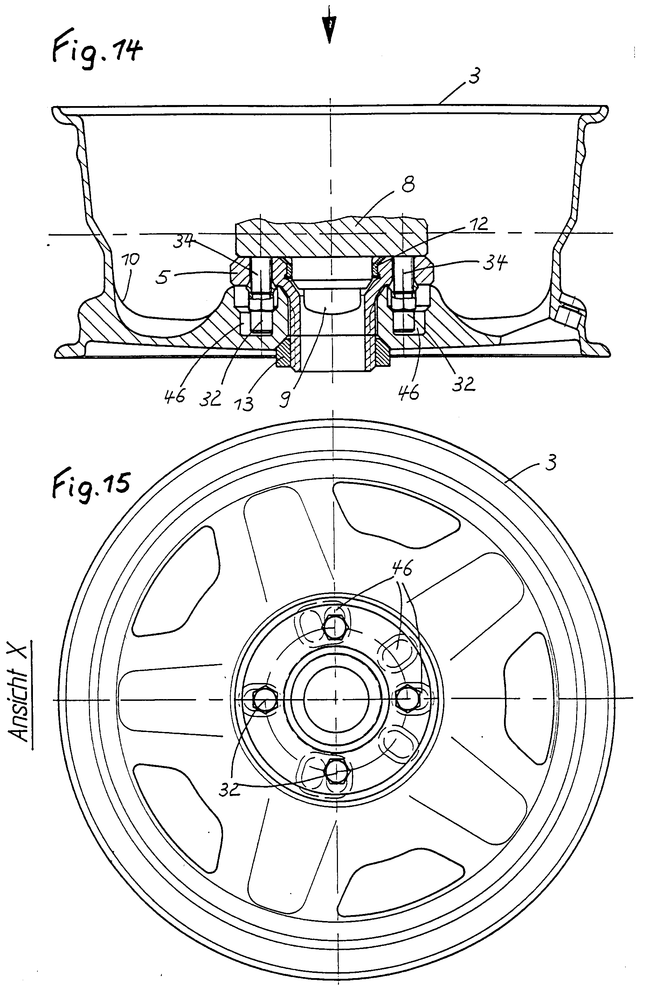

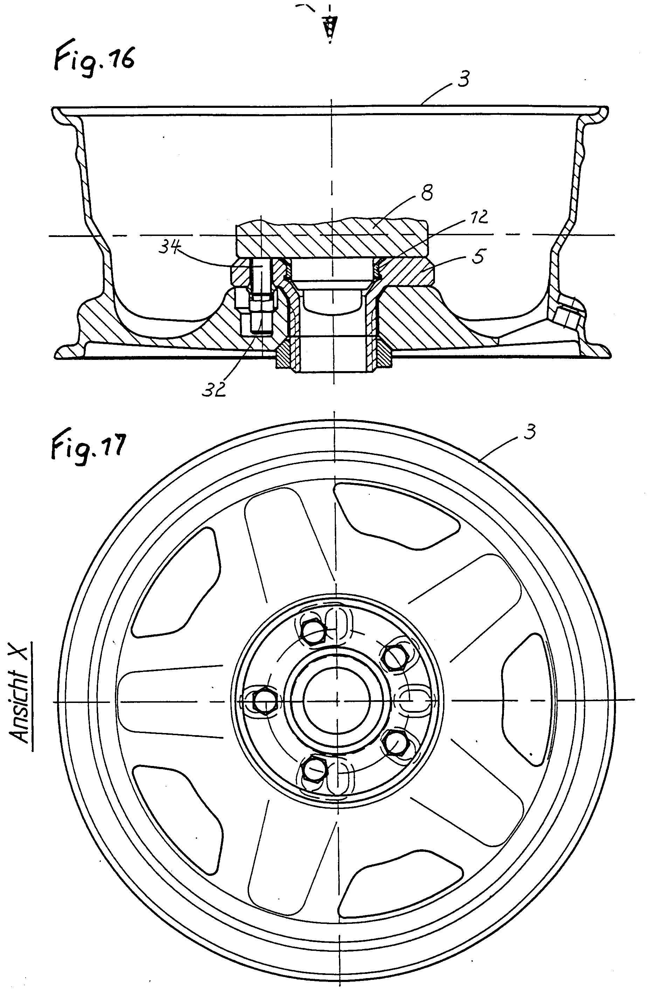

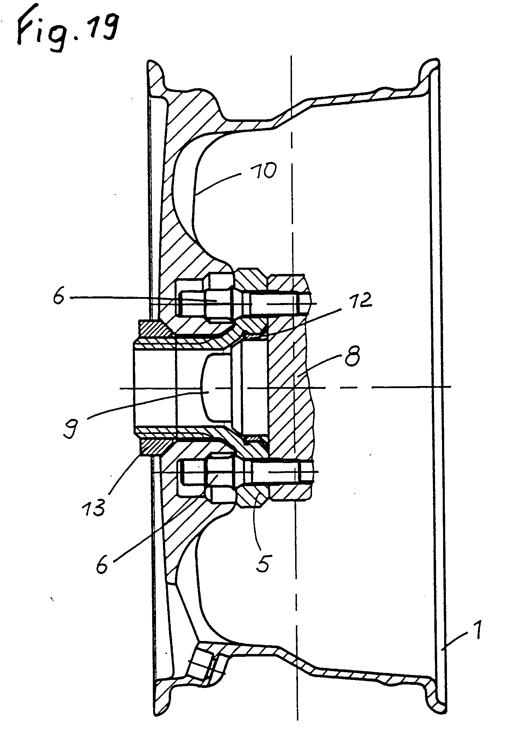

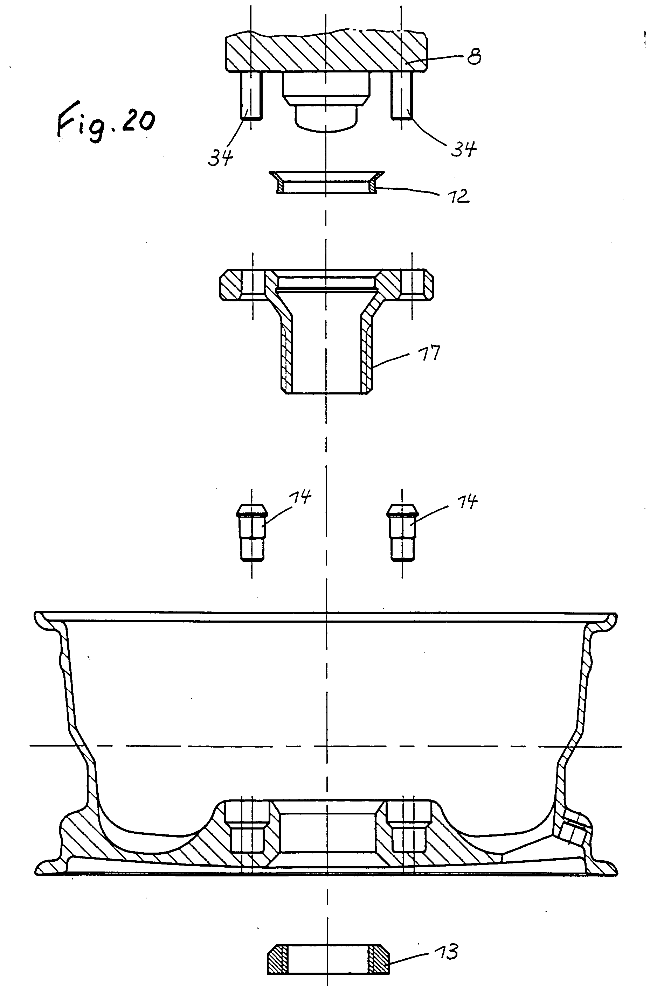

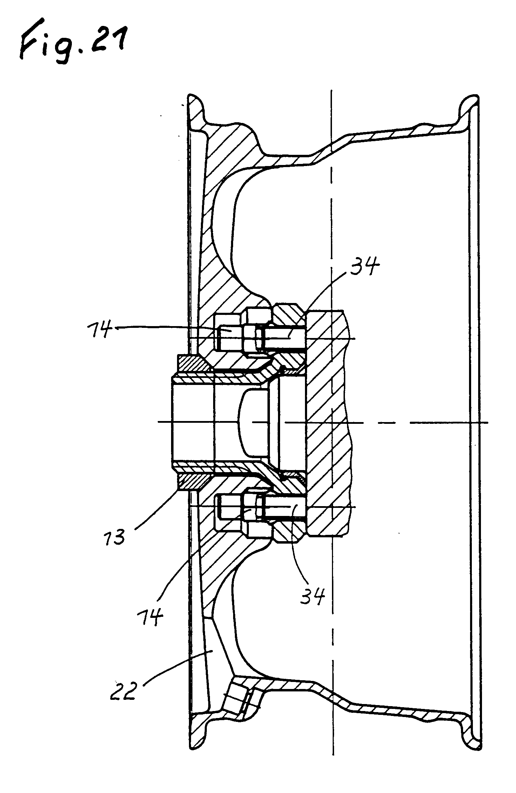

Die Zentrierung des Rades läßt sich nicht nur mit Zentrierbundschrauben 6 sicherstellen, wie nochmals aus der Zusammenbaudarstellung von **Fig. 19** hervorgeht, sondern auch mittels Zentrierbundmuttern 14, falls an der Fahrzeugachsnabe 8 Stehbolzen 34 angebracht sind, auf die solche Muttern aufschraubbar sind, wie in der **Figuren 14, 15, 16, 17, 20 und 21** entnommen werden kann. Hierbei betrifft die in den **Figuren 14 und 15** dargestellte Radkonstruktion eine Vier-Loch-Ansführung, bei der die Sechskantzentrierbundmuttern 32, die den Zentrierbundmuttern 14 in der Explosionsdarstellung der **Figur 20** entsprechen, auf die Stehbolzen 34 aufgeschraubt sind und in die Langlöcher 46 einer kombinierten Vier-Fünf-Loch-Ausführung der Radfelge 3 sitzen, während die **Figuren 16 und 17** den Einbauzustand für fünf Zentrierbundmuttern bei einer kombinierten Vier-Fünf-Loch-Ausführung verkörpern. Die Anordnung der Ausbildung des Nabenadapters 5 und Distanzrings 12 entsprechen den vorher beschriebenen Ausführungsbeispielen. In jedem Fall bieten die im obigen erwähnten Langlöcher 46, 47 auf der Rückseite der Radfelge die Möglichkeit der Anwendung eines Rades mittels eines Nabenadapters für Fahrzeuge mit einem Lochkreisdurchmesser von 98 mm bei vier Löchern und bis zu einem Lochkreisdurchmesser von 120 mm bei fünf Löchern.

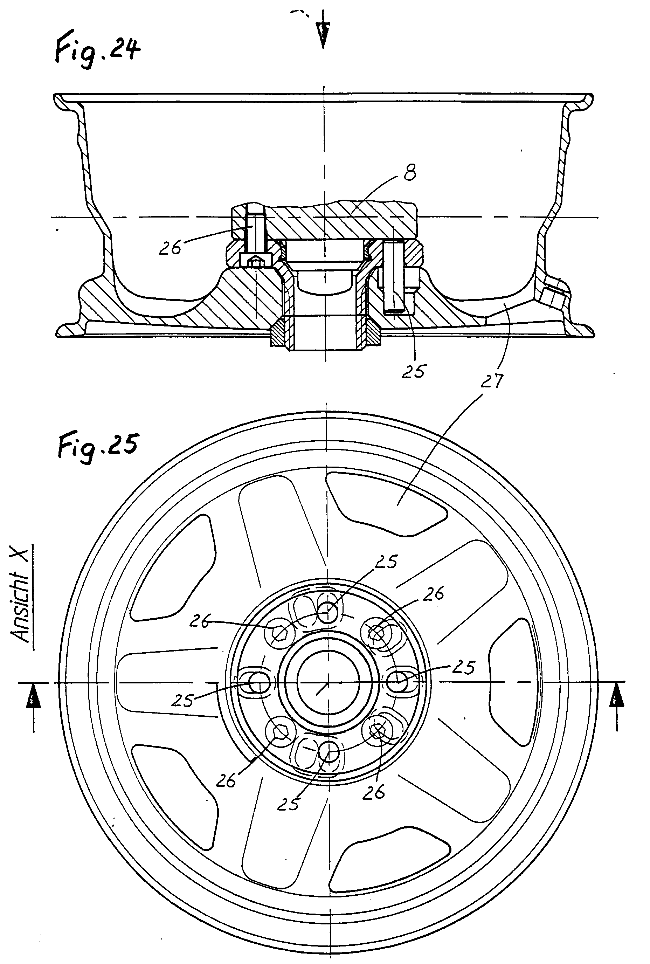

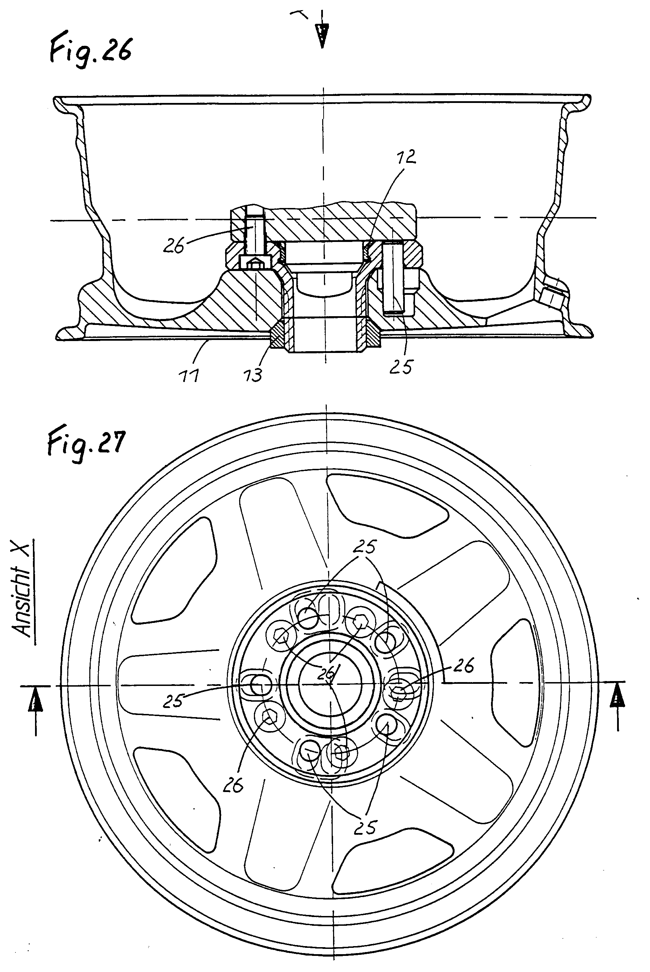

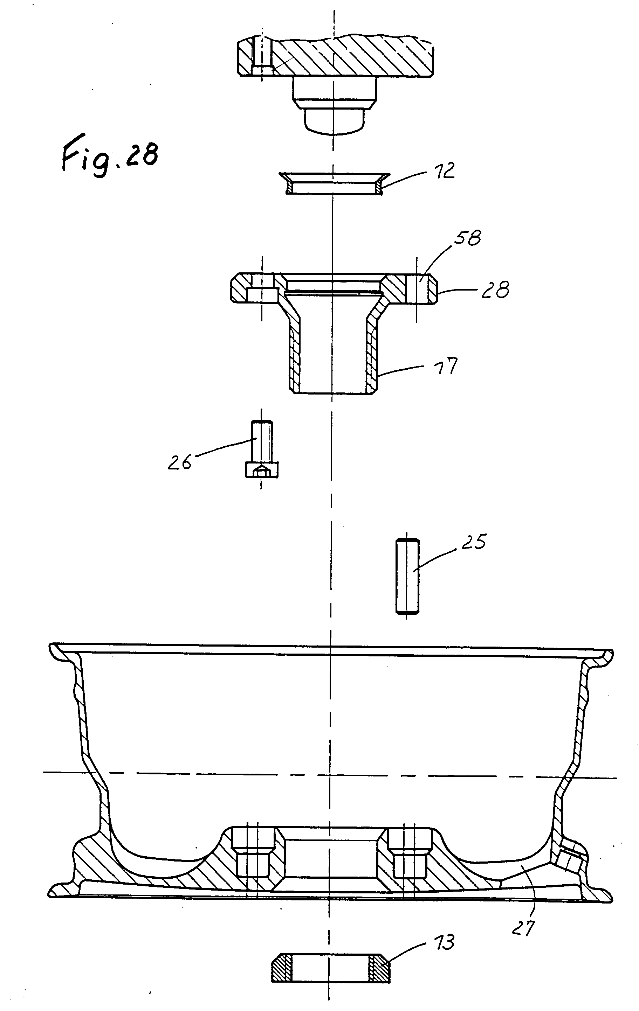

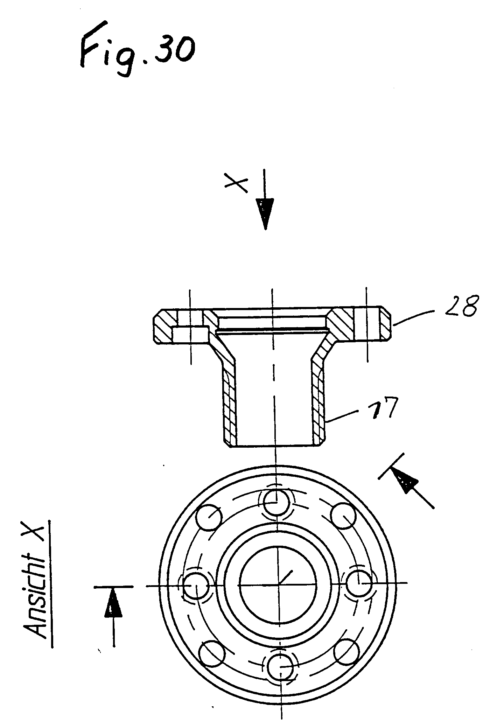

Eine weitere konstruktive Variante des hier beschriebenen Einheitsradsystems im Hinblick auf die Befestigung des Nabenadapters an der Fahrzeugachsnabe 8 und Zentrierung des Rades bzw. der Radfelge bei Verwendung einer Zentralverschlußschraube 13 zeigen die **Figuren 24 und 25** für eine Vier-Loch-Ausführung sowie **Figuren 26 und 27** für eine Fünf-Loch-Ausführung und **Fig. 28** in Form einer Explosionsdarstellung dieser letztgenannten beiden Ausführungsformen sowie **Fig. 30** in bezug auf den verwendeten Nabenadapter.

Bei dieser Konstruktion wird der Nabenadapter 28 mit Hilfe von Maschinenschrauben 26 an die Fahrzeugachsnabe 8 angeschraubt und die Radfelge mit Hilfe von Zentrierpaßstiften 25, die in entsprechenden Bohrungen des Nabenadapters 58 sitzen, zentriert, wobei sie in der Rückseite 10 der Radfelge befindliche Langlöcher eingreifen, wie aus den **Figuren 25 und 27** hervorgeht. Auf diese Weise wird, wie auch in den oben beschriebenen Fällen der Radzentrierung die vom TÜV geforderte formschlüssige Verbindung geboten, wenn für die Radbefestigung eine Zentralverschlußmutter 13 Verwendung findet. Das Drehmoment muß nämlich wie bei normalen Rädern auch mittels Kraftschluß über die Anlagefläche übertragen werden. Dazu wird die Zentralverschlußmutter it einem definierten Moment angezogen.

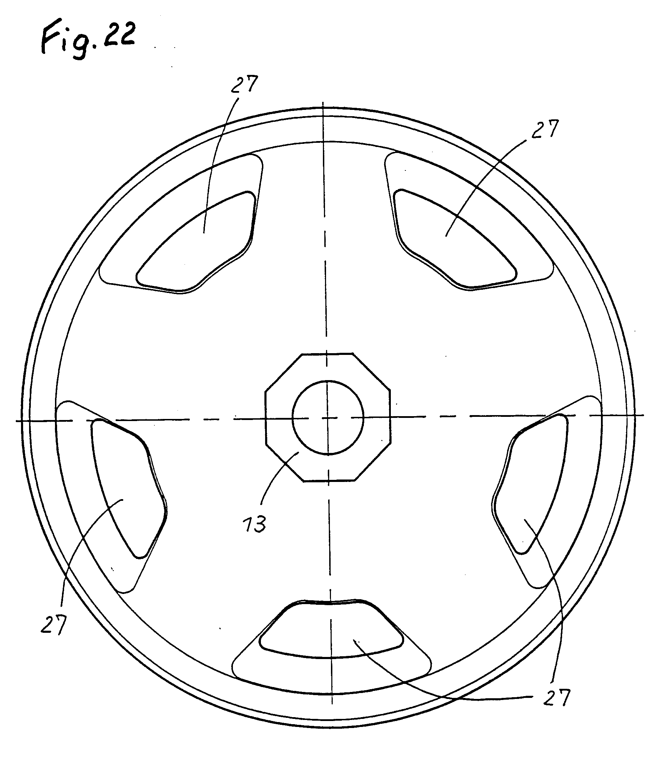

Bei den oben beschriebenen konstruktiven Ausführungsformen des Einheitsradsystems erfolgt die Radbefestigung mit einer Zentralverschlußmutter 13, die auf die zylindrische Hülse 17 des Nabenadapters aufgeschraubt wird und gegen die Vorderseite 11 der Radfelge festgezogen wird. Eine Frontansicht eines so befestigten Einheitsrades ist in **Fig. 22** dargestellt, wobei das Bezugszeichen 27 die frontseitigen Felgenöffnungen bezeichnet.

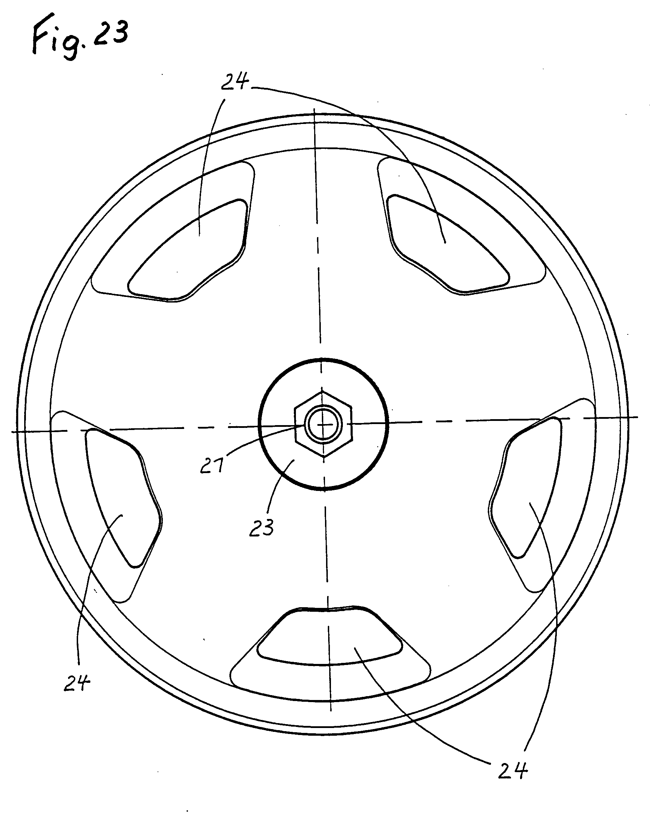

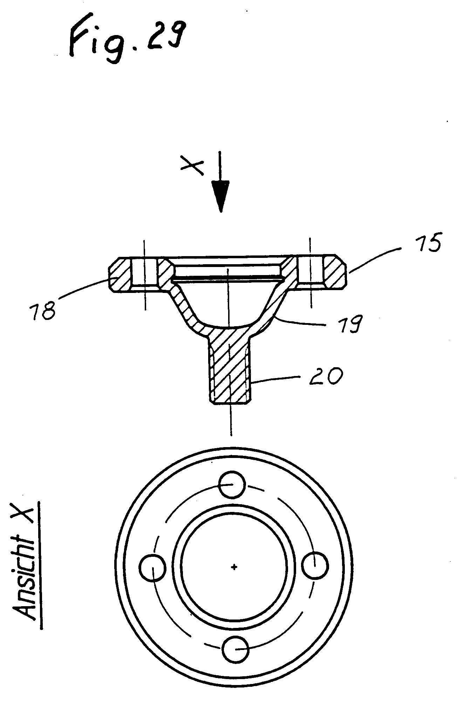

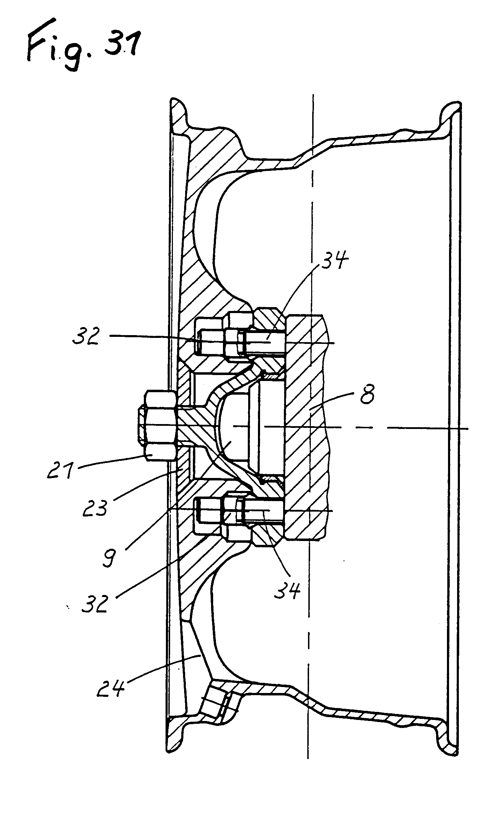

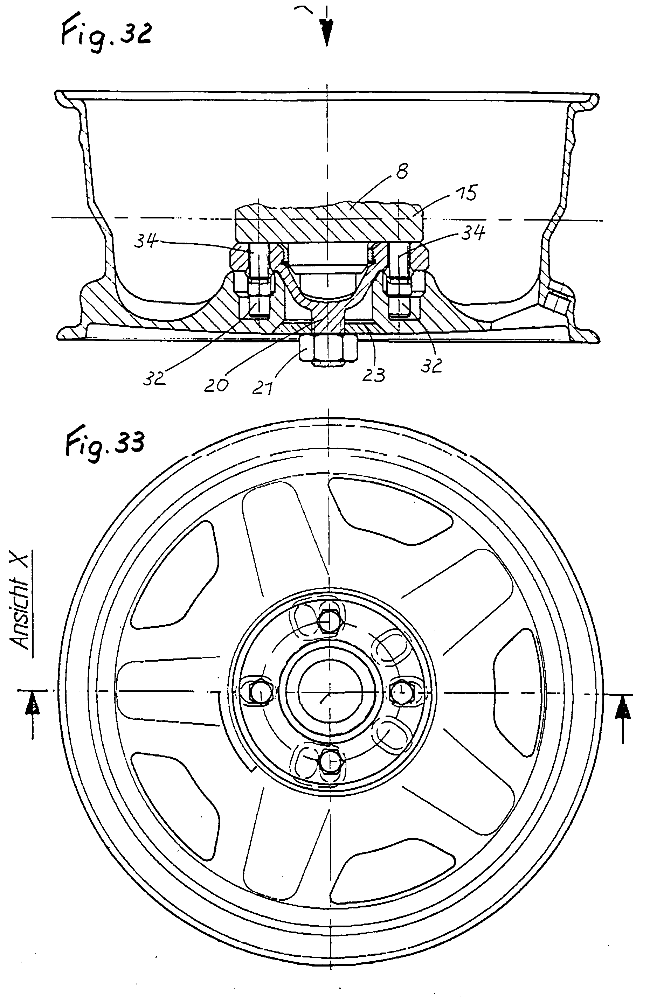

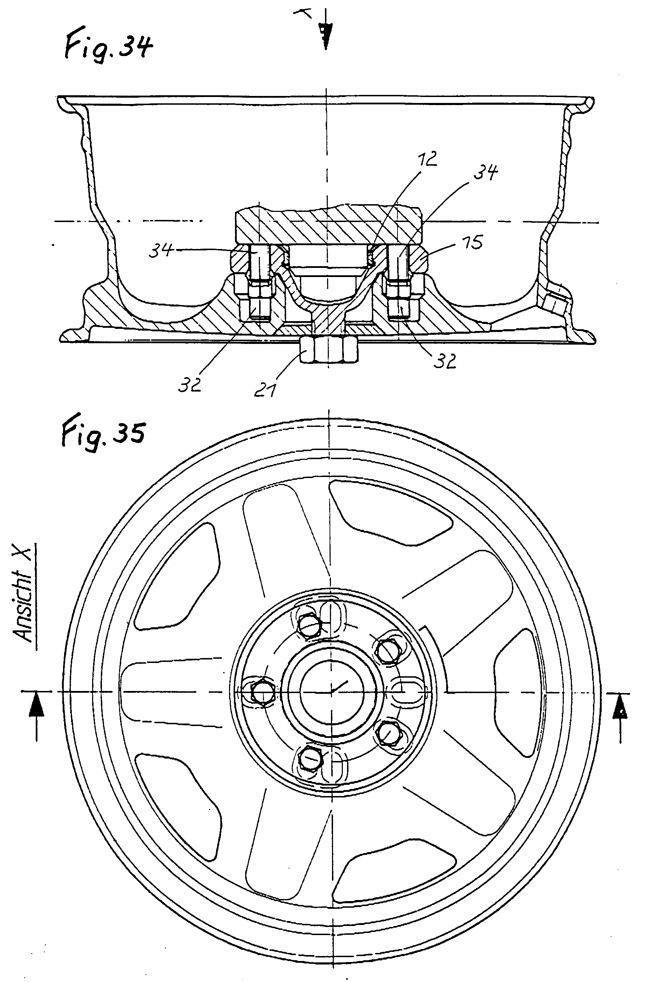

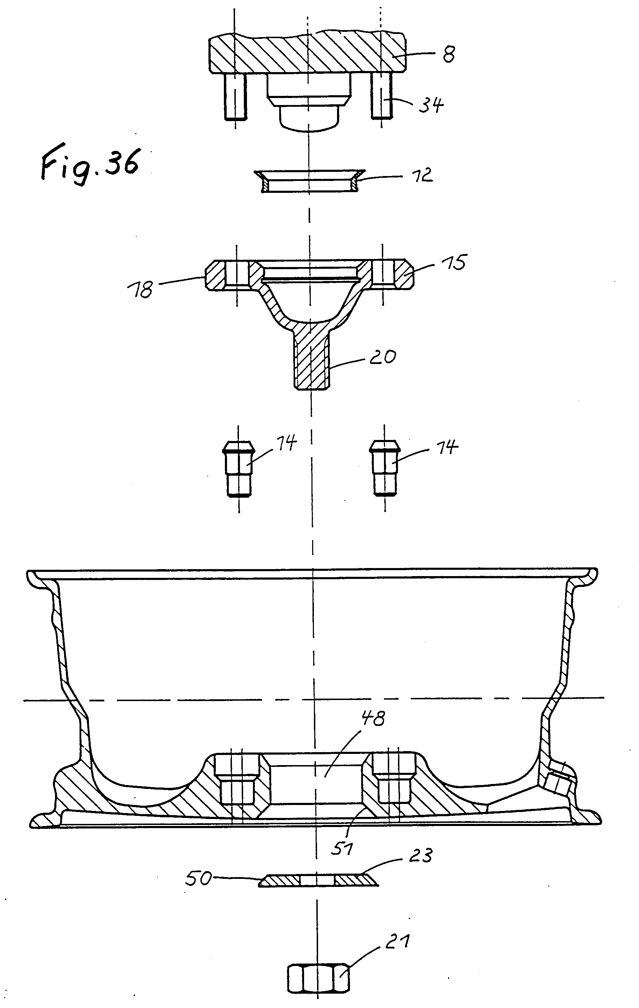

Eine andere Ausbildung des Nabenadapters 15, bei der das sich durch die Radfelge hindurcherstreckende zylindrische Teil 20 nicht als Hohlzylinder oder Rohr ausgebildet ist sondern als Zapfen, auf den die zentrale Verschlußmutter 21 aufschraubbar ist, ist in den **Figuren 23, 29, 31, 32, 33, 34, 35, 36** im Zusammenhang mit anderen konstruktiven Gestaltungsmerkmalen dargestellt. Die Zentralverschlußmutter 21, die hier eine normale Maschinenmutter sein kann, ruht im aufgeschraubten Zustand auf einer in die Öffnung der Radfelgenbohrung 48 eingelegten Scheibe 23 (**Fig. 36**), und an das hintere Ende des Zapfens 20 schließt sich ein sich in Richtung auf das hintere Ende des Nabenadapters 15 erweiterter Konus 19 an, der die Fettkappe 9 umschließt und einen Befestigungsflansch 18 aufweist, der mit dem Befestigungsflansch 16 der vorherigen Ausführungsformen des Nabenadapters vergleichbar ist.

Eine Frontansicht des sich mit der Zentralverschlußschraube in Form einer Maschinenmutter 21 festgeschraubten Rades ist aus **Fig. 23** ersichtlich, wobei die Felgenöffnungen auf der Vorderseite der Radfelge mit 24 zu bezeichnen sind.

Grundsätzlich ist die genannte Nabenadapterform, die durch einen sich durch die Radfelge hindurcherstreckenden zapfen mit Außengewinde gekennzeichnet ist, auf den die Radmutter aufgeschraubt wird, in ihren sonstigen konstruktiven und funktionellen Gestaltungselementen mit dem hülsenförmigen Nabenadapter 4, 5 vergleichbar, so daß die im obigen gemachten Ausführungen zur Befestigung und Zentrierung des Adapters an der Achsnabe 8 auch für den vorliegenden Fall zutreffen, wie insbesondere ein Vergleich der diesbezüglichen Zeichnungsfiguren zeigt. Insbesondere bietet auch der letztgenannte Nabenadapter 15 die Möglichkeit des Einsetzens von Distanzringen, um den Abstand zwischen der Fahrzeugnabenoberfläche und dem Distanzringsitz innerhalb des Nabenadapters zu überbrücken. Somit läßt sich auch dieser Nabenadapter an verschiedene Fahrzeugtypen anpassen.

Anstelle der Scheibe 23, auf der im angeschraubten Zustand des Rades die Zentralverschlußmutter 21 aufliegt und die mit einem kegelförmigen Umfangsrand 50 versehen ist, der in einem entsprechend ausgebildeten Sitz 51 in der zentralen Radfelgenöffnung 48 ruht, wie in **Fig. 36** dargestellt ist, läßt sich auch die Radmutter 21 mit einem Kegelbund versehen.

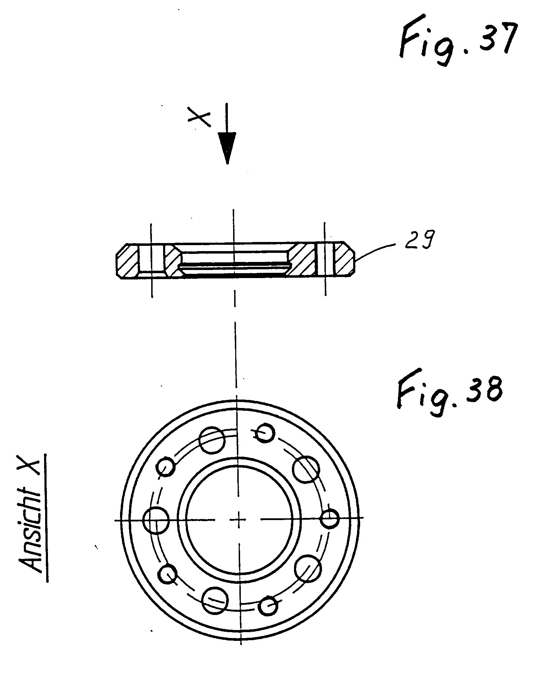

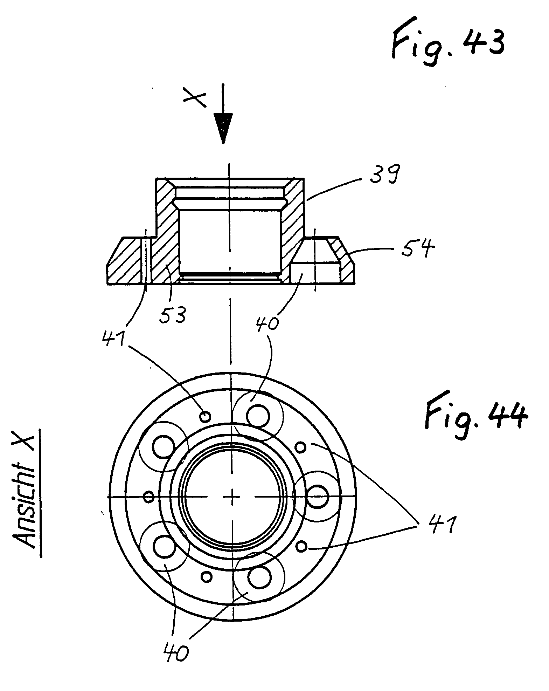

Für den Fall, daß das Rad bzw. die Radfelge nicht mit Hilfe einer Zentralverschlußmutter befestigt werden soll, sondern mittels üblicher Radschrauben, die von der Außenseite 11 der Radfelge zugänglich sind, kann der Nabenadapter 29, 39 die in den **Figuren 37 bis 47** dargestellten Konfigurationen aufweisen, wobei die Radfelge 49, 50 mit Hilfe des Adapters sowie wenigstens eines Zentrierelements 36, 44 und mehrerer Radschrauben an der Fahrzeugnabe bzw. der Bremsscheibe oder Bremstrommel 8 befestigbar ist, und zwar unter Verwendung von Distanzringen, die wie im Falle der vorher beschriebenen Konstruktionen in den Nabenadapter eingesetzt werden, um dessen Durchgangsöffnung an unterschiedliche Fahrzeugachsnabendurchmesser anzupassen.

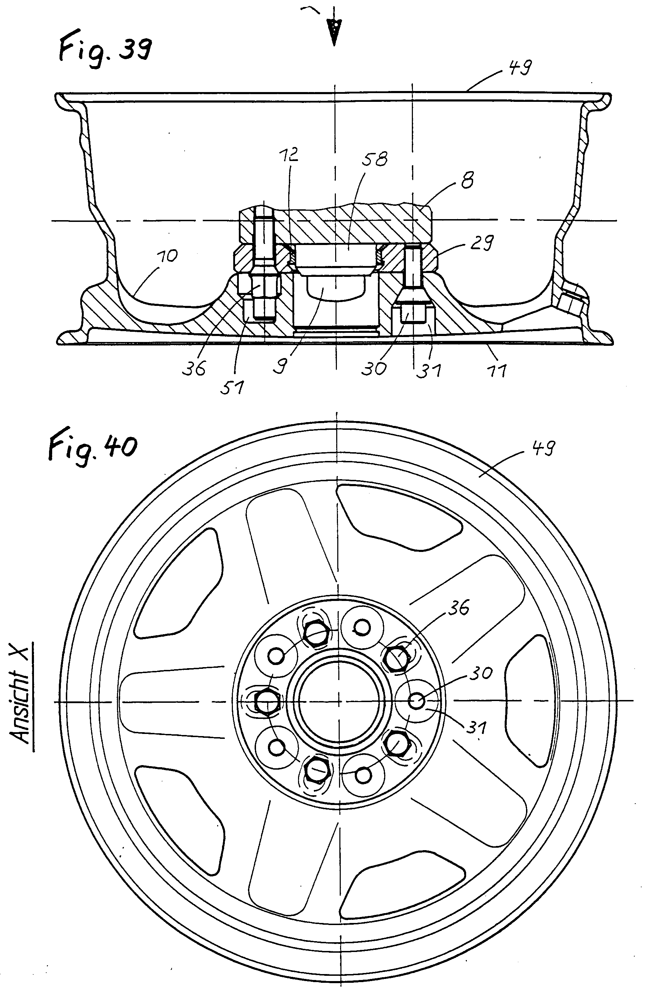

Wie aus den **Figuren 37 und 38** ersichtlich, ist der Nebenadapter 29 eine flache Scheibe, die mittels Zentrierbundschrauben 36 an der Fahrzeugachsnabe befestigt wird und dabei die Achsnabe 58 umgibt. Der eingesetzte Distanzring 12 weist eine Wanddicke auf, die so bemessen ist, daß sie den Abstand zwischen der Achsnabenoberfläche und der Sitzoberfläche für den Distanzring im Nabenadapter überbrückt. Mit Hilfe von Radschrauben 30, die durch Öffnungen 31 in der Vorderseite 11 der Radfelge hindurchgesteckt werden, wird die Radfelge 49 mit dem Nabenadapter verschraubt. **Figur 40** zeigt, daß in den Zwischenräumen einer Fünf-Loch-Ausführung für die Zentrierbundschrauben 36, deren Köpfe wiederum in Langlöchern sitzen, fünf Maschinenschrauben 30 vorgesehen sind, so daß der ringförmige Nabenadapter 29 die in **Fig. 38** gezeigte Durchgangsbohrung für die Zentrierbundschrauben und Radschrauben aufweist, die in der Radfelge angeordnet sind, so daß nur die Radschrauben 30 von außen zugänglich sind.

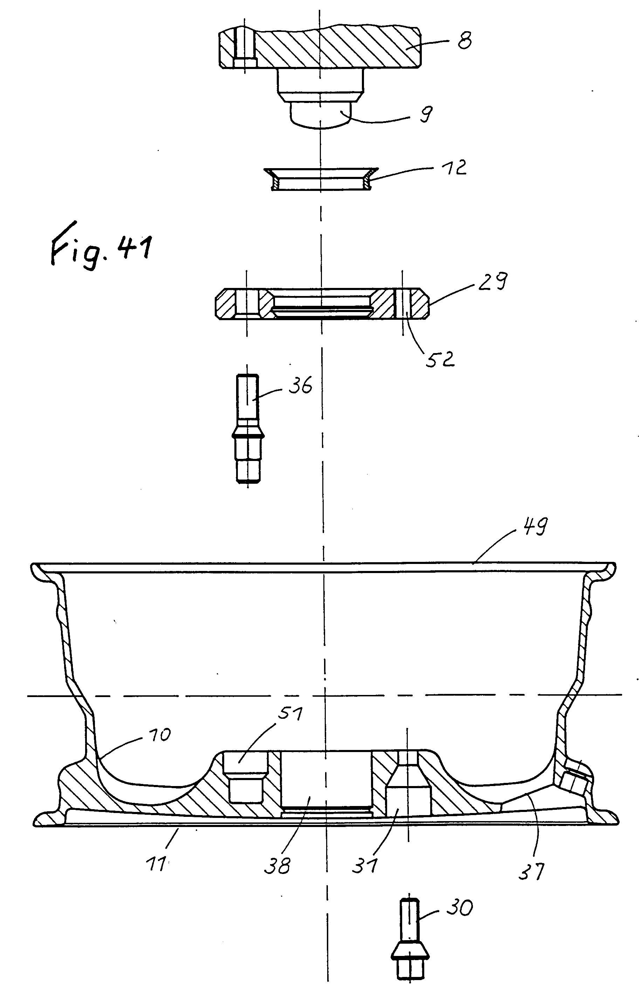

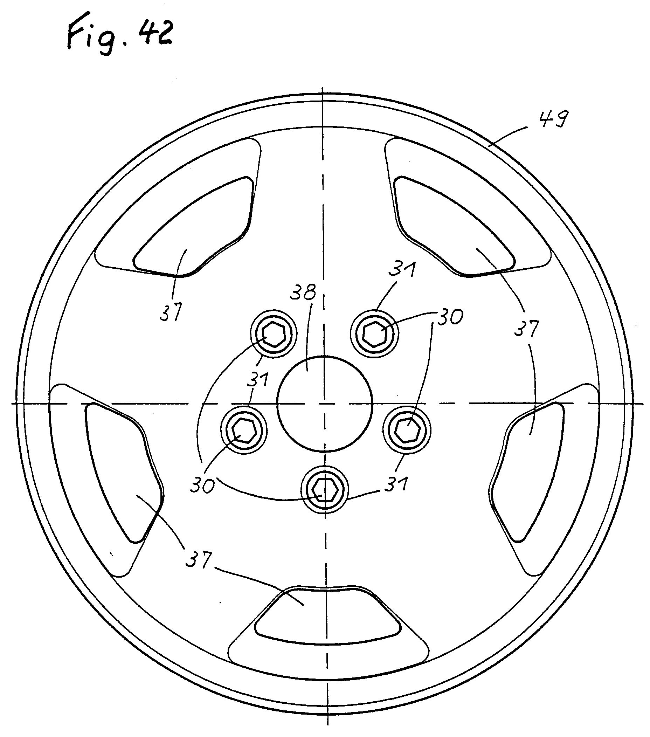

Die obige Einbausituation ergibt sich auch aus der in **Fig. 41** gezeigten Zusammenbaudarstellung, während **Fig. 42** die Frontansicht des in den **Figuren 39 bis 41** gezeigten Rades im zusammengebauten Zustand darstellt, aus der ersichtlich ist, daß die Vorderseite 11 der Radfelge 49 mit Durchbruchsöffnungen 37 versehen ist sowie mit einer zentralen Öffnung 38.

Die in den **Figuren 43 bis 47** dargestellte weitere konstruktive Variante des Einheitsradsystems kennzeichnet sich durch einen Nabenadapter 39, der in eine große Öffnung 55 in der Vorderseite 11 der Radfelge 50 eingesteckt wird und in dieser Öffnung eine formschlüssige Verbindung durch entweder Verzahnung oder Paßstifte 44 gegen ein Durchdrehen des Rades bei eventueller Lockerung der Verschraubung aufweist. Der Nabenadapter 39 weist zu diesem Zweck einen Randflansch 53 auf, an den sich eine zylindrische Verlängerung 58 anschließt, in deren hinterem Ende sich der Sitz für den Distanzring 12 befindet, welcher, wie bei den oben beschriebenen Ausführungsformen den Abstand zwischen der Oberfläche der Achsnabe und der Sitzoberfläche überbrückt.

Der so gestaltete Nabenadapter, dessen zylindrische Verlängerung 58 von der Radnabe 56 umgeben ist, ist mit Verschraubungsbohrungen 40, 45 für Radschrauben 43 zur Befestigung an der Fahrzeugradnabe 8 versehen, weshalb unterschiedliche Nabenadapter für die Anbindung an die Verschraubungspunkte der Fahrzeuge erforderlich sind.

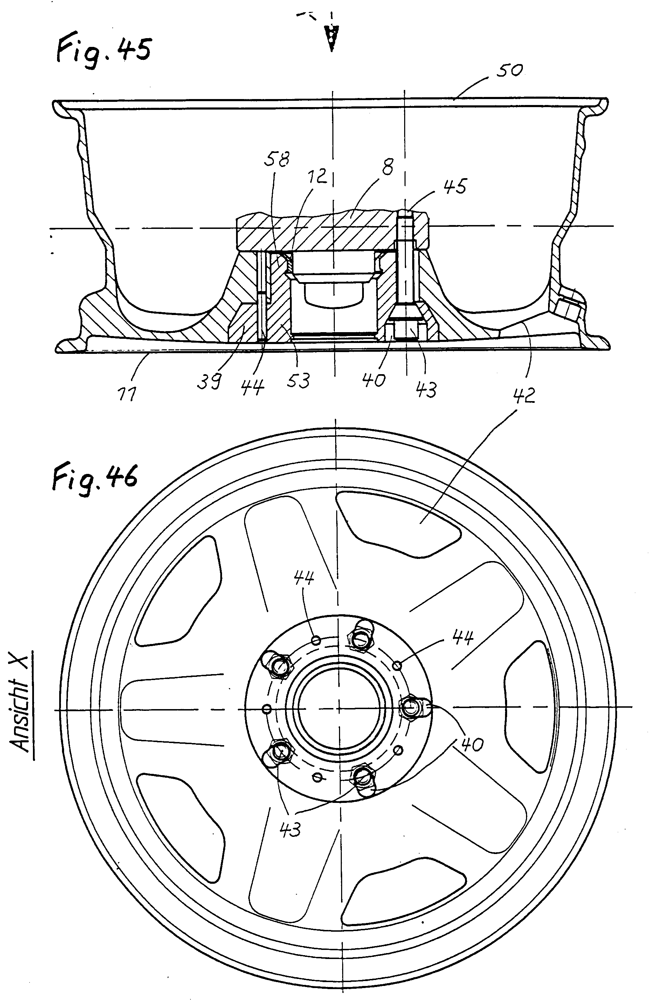

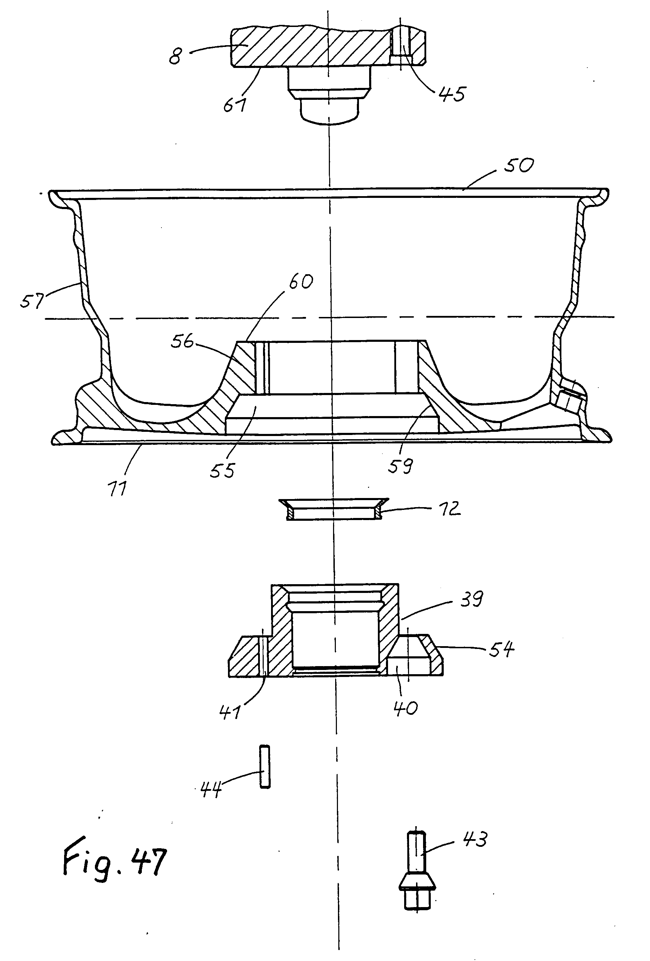

**Figur 47** verdeutlicht als Explosionsdarstellung die Einbausituation eines solchen Adapters von der Felgenvorderseite 11 aus und die Befestigung des eingebauten Nabenadapters mittels Radschrauben oder -muttern in oder an den Serien-Anschraubpunkten. Die Zentrierung des Rades erfolgt über die Zentrierringe am Achs-Zentrierbund des Fahrzeugs. Die Verschraubung drückt einen ringförmigen Flansch 54 am vorderen Ende des Nabenadapters 39 gegen einen entsprechend geformten Bund 59 in der Felgenöffnung, wodurch wiederum das Rad mit seiner hinten liegenden Anlagefläche 60 gegen die Bremsscheibe oder Bremstrommel 8 gedrückt wird. Durch diese Flächenpressung wird das Drehmoment übertragen. Der Nabenadapter 39 selbst sollte von der Anlagefläche 61 (**Fig. 47**), wie aus **Fig. 45** ersichtlich, einen geringen Abstand von etwa 0,5 mm haben, da er diese Anlagefläche nicht berühren darf.

Der Vorteil der letztgenannten konstruktiven Variante des Einheitsradsystems ist darin zu sehen, daß Rad und Nabenadapter mit Hilfe derselben Verbindungselemente befestigt werden, also keine getrennte Verschraubung erfordern. Der Nachteil ergibt sich daraus, daß aufgrund der unterschiedlichen Lage der Verschraubungspunkte an den einzelnen Fahrzeugtypen unterschiedliche Adapter notwendig sind.

## Patentansprüche

1. Einheitsradsystem für Straßenfahrzeuge, insbesondere Personenkraftwagen, mit einer Radfelge (1, 2, 3), insbesondere aus Leichtmetall, und mit einem Nabenadapter (4, 5, 15, 37), der mittels einer Verschraubung (6, 14, 26, 32, 33,) an der Fahrzeugachsnabe bzw. Bremsscheibe oder Bremstrommel anbringbar ist und einen sich durch die Radfelge (1, 2, 3) erstreckenden, zentrischen, zylindrischen Teil (17) mit Gewinde sowie mit einer zumindest zur Fahrzeugachsnabe (8) hin offenen, zentralen Bohrung aufweist, wobei die Radfelge (1, 2, 3) mittels einer mit dem Gewinde des Nabenadapters (4, 5, 15, 28) zusammenwirkenden Zentralverschlußmutter (13, 21) und mehrerer Zentrierelemente (6, 14, 25, 32, 33) an dem Nabenadapter und dadurch an der Fahrzeugachsnabe bzw. Bremsscheibe oder Bremstrommel befestigbar ist und wobei die der Fahrzeugachsnabe (8) zugewandte Rückseite (10) der Radfelge (1) mehrere zentrisch angeordnete Löcher (46) zur Aufnahme jeweils des einen Endes eines der Zentrierelemente (6, 14, 25, 32, 33) aufweist, **dadurch gekennzeichnet**, daß die in der Radfelge (1) vorgesehenen Löcher in Form von Langlöchern (46, 47) ausgebildet sind und daß zwischen dem Achsnabenumfang und der zentralen Bohrung des Nabenadapters (4, 5, 15,) ein Zwischenraum vorgesehen ist, der mittels eines Distanzrings (12) ausfüllbar ist.

2. Ein Einheitsradsystem nach Anspruch 1, **dadurch gekennzeichnet**, daß die Rückseite (10) der Radfelge (1) mit vier Langlöchern (46) zur Aufnahme von vier den Nabenadapter (4) befestigenden Zentrierbundschrauben (33) bzw. von vier den Nabenadapter befestigenden Stehbolzen (34) und Zentrierbundmuttern (32) versehen ist (Vier-Lochausführung).

3. Einheitsradsystem nach Anspruch 1, **dadurch gekennzeichnet** daß die Rückseite (10) der Radfelge (2) mit fünf Langlöchern (47) zur Aufnahme von fünf den Nabenadapter (5) an der Fahrzeugachsnabe (8) befestigenden Zentrierbundschrauben (33) oder an der Fahrzeugachsnabe (8) angebrachten Stehbolzen (34) und auf diese aufschraubbaren Zentrierbundmuttern (32) versehen ist (Fünf-Lochausführung).

4. Einheitsradsystem nach einem der Ansprüche 1 - 3, **dadurch gekennzeichnet**, daß die Rückseite (10) der Radfelge (3) mit vier Langlöchern (46) und fünf weiteren Langlöchern (47), die auf dem-selben Lochkreis liegen, zur Aufnahme von den Nabenadapter (5) an der Fahrzeugachsnabe (8) befestigenden Zentrierbundschrauben bzw. von an der Fahrzeugachsnabe (8) angebrachten Stehbolzen (34) und Zentrierbundmuttern (32) versehen ist (kombinierte Vier-Fünf-Lochausführung).

5. Einheitsradsystem nach einem der vorhergehenden Ansprüche, **dadurch gekennzeichnet**, daß der sich durch die Radfelge (1, 2, 3) hindurcherstreckende zylindrische Teil (17) des Nabenadapters (4, 5) ein Hohlzylinder ist, auf den die Zentralverschlußmutter (13) aufschraubbar ist und dessen hinteres Ende zur Umschließung der Fettkappe (9) der Fahrzeugachsnabe (8) konisch erweitert ist und einen Befestigungsflansch (16) aufweist und dessen vorderes Ende einen Außendurchmesser besitzt, der etwa dem Innendurchmesser der zentrischen Radfelgenbohrung (48) entspricht, durch die sich der Nabenadapter erstreckt.

6. Einheitsradsystem nach einem der Ansprüche 1 - 4, **dadurch gekennzeichnet**, daß der sich durch die Radfelge erstreckende zylindrische Teil (20) des Nabenadapters (15) an seinem vorderen Ende zu einem Zapfen verjüngt ist, auf den die Zentralverschlußmutter (21) aufschraubbar ist, die auf einer in die Öffnung der Radfelgenbohrung (48) eingelegten Scheibe (23) sitzt, und daß sich an das vordere zapfenförmige Ende ein sich in Richtung auf das hintere Ende des Nabenadapters (15) erweiternder Konus (19) anschließt, der die Fettkappe (9) umschließt und einen Befestigungsflansch (18) trägt.

7. Einheitsradsystem für Straßeufahrzeuge, insbesondere Personenkraftwagen, mit einer mehrere zentrisch angeordnete Löcher (51) aufweisenden Radfelge (49), insbesondere aus Leichtmetall, und mit einem eine zumindest zur Fahrzeugachsnabe (8) hin offene, zentrale Bohrung aufweisenden Nabenadapter (29), durch den die Radfelge (49) mittels mehrere Zentrierelemente (36) und wenigstens zweier Radschrauben (30) an der Fahrzeugachsnabe bzw. der Bremsscheibe oder Bremstrommel (8) befestigbar ist, **dadurch gekennzeichnet**, daß die in der Radfelge (49) vorgesehenen Löcher in Form von Langlöchern (51) ausgebildet sind und daß zwischen dem Achsnabenumfang und der zentralen Bohrung des Nabenadapters (29) ein Zwischenraum vorgesehen ist, der mittels eines Distanzrings (12) ausfüllbar ist.

8. Einheitsradsystem nach Anspruch 7, **dadurch gekennzeichnet**, daß die Radfelge (49) auf ihrer Vorderseite (11) mit fünf Durchgangslöchern (31) für Radschrauben (30) und auf ihrer Rückseite (10) mit fünf langlochartigen Blindlöchern (51) für Zentrierbundschrauben (36) versehen ist.

9. Einheitsradsystem für Straßenfahrzeuge, insbesondere Personenkraftwagen, mit einer Radfelge (50), insbesondere aus Leichtmetall, und mit einem Nabenadapter (39), der mittels einer Verschraubung (43) und wenigstens eines Zentrierelements (44) an der Fahrzeugachsnabe bzw. Bremsscheibe oder Bremstrommel (8) anbringbar ist, **dadurch gekennzeichnet**, daß der Nabenadapter (39) von der Vorderseite (11) der Radfelge (50) in die zentrische Öffnung (53) der Radfelge (50) einsetzbar ist, in dieser Öffnung mit einem Paßstift (44) als Zentrierelement festlegbar und mit Hilfe wenigstens zweier Radschrauben (43), die sich durch Öffnungen (45) im Nabenadapter (39) hindurch erstrecken, zur Befestigung der Radfelge (50) mit der Fahrzeugachsnabe (8) verschraubbar ist und daß zwischen dem Achsnabenumfang und dem Nabenadapter (39) zur Anpassung des Innendurchmessers der zentrischen, hinteren Nabenadapteröffnung an unterschiedliche Achsstummel ein Distanzring (12) angeordnet ist, der die Nabenadapteröffnung als Sitz hat.

10. Einheitsradsystem nach Anspruch 9, **dadurch gekennzeichnet**, daß der Nabenadapter (39) auf seiner Vorderseite einen Flansch (54) aufweist, der in eine entsprechende Vertiefung (55) der Radfelgennabe (56) einsetzbar ist.

11. Einheitsradsystem nach Anspruch 9 oder 10, **dadurch gekennzeichnet**, daß der Nabenadapter (39) mit fünf zentrisch angeordneten Durchgangsbohrungen (40) zur Aufnahme von Radschrauben (43) sowie mit fünf zentrisch angeordneten Durchgangsbohrungen (41) zur Aufnahme von Paßstiften (44) versehen ist.

12. Einheitsradsystem nach einem der Ansprüche 1 bis 11, **dadurch gekennzeichnet**, daß der Distanzring (12) aus Kunststoff besteht.

13. Einheitsradsystem nach einen, der Ansprüche 1 bis 11, **dadurch gekennzeichnet**, daß der Distanzring (12) aus Metall besteht.

## Claims

1. A unitary wheel system for road vehicles, especially cars, comprising a wheel rim (1, 2, 3), consisting especially of aluminum, and a hub adapter (4, 5, 15, 37) which can be attached by means of screws (6, 14, 26, 32, 33) to the vehicle hub or brake disc, respectively, or brake drum, and further comprising a central, cylindrical part (17) provided with a thread and extending through the wheel rim (1, 2, 3), as well as with a central bore which is at least opening in the direction of the vehicle axle hub (8) so that the wheel rim (1, 2, 3) may be attached to the vehicle axle hub or brake disc, respectively, or brake drum by means of a central closing nut (13, 21) cooperating with the thread of the hub adapter (4, 5, 15, 28) as well as by means of several centering elements (6, 14, 25, 32, 33) and wherein the rear side (10) of the wheel rim (1) adjacent to the vehicle axle hub (8) is provided with several centrically positioned holes (46) for the reception of each of the one ends of the centering elements (6, 14, 25, 32, 33), characterized in that the holes within the wheel rim (1) are configured as elongated holes (46, 47) and that between the axle hub periphery and the central bore of the hub adapter (4, 5, 15) a distance space is provided which can be filled by means of a distance ring (12).

2. Unitary wheel system according to claim 1, characterized in that the rear side (10) of the wheel rim (1) is provided with four elongated holes (46) for the reception of four centering screws (33) fixing the hub adapter (4) or four stand bolts (34) and centering nuts (32) for fixing said hub adapter (four-hole arrangement).

3. Unitary wheel system according to claim 1, characterized in that the rear side (10) of the wheel rim (2) is provided with five elongated holes (47) for the reception of five centering screws (33) fixing the hub adapter (5) to the axle hub (8) of the vehicle or for the reception of stand bolts (34) and centering nuts screwed thereto attached to the axle hub (8) of the vehicle (live-hole arrangement).

4. Unitary wheel system according to one of the claims 1 - 3, characterized in that the rear side (10) of the wheel rim (3) is provided with four elongated holes (46) and further five elongated holes (47) located on the same hole circuit for the reception of centering screws fixing the hub adapter (5) to the axle hub (8) of the vehicle also the reception of stand bolts (34) and centering nuts (32) attached to the axle hub (8) of the vehicle (combined four-five-hole arrangement).

5. Unitary wheel system according to one of the preceeding claims, characterized in that the cylindrical part (17) of the hub adapter (4, 5) extending through the wheel rim (1, 2, 3) is a hollow cylinder onto which the central closing nut (13) is screwed and the rear end of which is conically enlarged to enclose the grease fat cap (9) of the axle hub (8) of the vehicle and is provided with an attachment flange (16), the front end of which having an outer diameter corresponding generally to the inner diameter of the centric bore (48) of the wheel rim through which the hub adapter extends.

6. Unitary wheel system according to one of the claims 1 - 4, characterized in that the cylindrical part (20) of the hub adapter (15) extending through the wheel rim is provided at its front end with a conical tap onto which the central closing nut (21) may be screwed located on a disc (23) inserted into the opening of the bore (48) of the wheel rim and that said front tapering end is a continuation in the direction of the rear end of the hub adapter (15) in form of an expanding cone (19) enclosing the grease cap (9) carrying an attachment flange (18).

7. Unitary wheel system for road vehicles, especially cars, comprising a wheel rim (49) especially of aluminium provided with several centrically located bolts (51), and further comprising a hub adapter (29) provided with a central bore opening at least to the axle hub (8) of the vehicle, by which hub adapter the wheel rim (49) may be attached to the axle hub of the vehicle or the brake disc, respectively, or the brake drum (8) by means of several centering elements (36) and at least two wheel screws (30), characterized in that the holes provided in the wheel rim (49) are configured as elongated holes (51) and that there is a space between the periphery of the axle hub and the centric bore of the hub adapter (29) which can be filled by a distance ring (12).

8. Unitary wheel system according to claim 7, characterized in that the wheel rim (49) is provided on its front side (11) with passage holes (31) for wheel screws (30) and on its rear side (10) with five elongated blind holes (51) for centering screws (36).

9. Unitary wheel system for road vehicles, especially cars, comprising a wheel rim (50), especially of aluminum, and a hub adapter (39), which can be attached by means of screws (43) and at least one centering element (44) to the axle hub of the vehicle or brake disc, respectively, or the brake drum (8), characterized in that the hub adapter (39) can be inserted from the front side (11) of the wheel rim (50) into the centrical opening (53) of the wheel rim (50) and can be fixed in that opening with a fit pin (44) as a centering element and can be screwed by means of at least two wheel screws (43), extending through the openings (45) in the hub adapter (39), in order to attach the wheel rim (50) to the axle hub (8) of the vehicle and that there is a distance ring (12) between the periphery of the axle hub and the hub adapter (39) in order to adapt the inner diameter of the centrical rear opening of the hub adapter to different axle taps, which distance ring has for its seat the opening of the hub adapter.

10. Unitary wheel system according to claim 9, characterized in that the hub adapter (39) is provided on its front side with a flange (54), which can be inserted into a corresponding recess (55) of the hub (56) of the wheel rim.

11. Unitary wheel system according to claim 9 or 10, characterized in that the hub adapter (39) is provided with five centrically arranged passage bores (40) for the reception of wheel screws (43) as well as with live centrically arranged passage bores (41) for the reception of fit pins (44).

12. Unitary wheel system according to one of the claims 1 - 11, characterized in that the distance ring (12) consists of plastic material.

13. Unitary wheel system according to one of the claims 1 - 11, characterized in that the distance ring (12) consists of metal.

## Revendications

1. Système unitaire de roue pour véhicules routiers, en particulier pour automobiles, comprenant une jante de roue (1, 2, 3), en particulier en métal léger, et comprenant un adaptateur de moyeu (4, 5, 13, 37) qui peut être monté sur le moyeu d'essieu du véhicule respectivement sur le disque de frein ou le tambour de frein par assemblage par vissage (6, 14, 26, 32, 33) et qui présente une partie cylindrique (17), centrale, s'étendant à travers la jante de roue (1, 2, 3), pourvue d'un filetage ainsi que d'un alésage central ouvert au moins dans la direction du moyeu d'essieu de véhicule (8), la jante de roue (1, 2, 3) pouvant être fixée à l'adaptateur de moyeu et ainsi au moyeu d'essieu de véhicule respectivement au disque de frein ou tambour de frein au moyen d'un écrou de verrouillage central (13, 21) coopérant avec le filetage de l'adaptateur de moyeu (4, 5, 15, 28) et de plusieurs éléments de centrage (6, 14, 25, 32, 33), et la face arrière (10) faisant face au moyeu d'essieu de véhicule (8) de la jante de roue (1) présentant plusieurs trous (46) disposés en cercle destinés à recevoir chacun une extrémité d'un élément de centrage (6, 14, 25, 32, 33), caractérisé en ce que les trous prévus dans la jante de roue (1) sont des trous oblongs (46, 47) et en ce qu'un espace intermédiaire est prévu entre la périphérie du moyeu d'essieu et l'alésage central de l'adaptateur de moyeu (4, 5, 15) qui peut être rempli au moyen d'une bague d'espacement (12).

2. Système unitaire de roue selon la revendication 1, caractérisé en ce que la face arrière (10) de la jante de roue (1) est pourvue de quatre trous oblongs (46) destinés à recevoir quatre vis d'assemblage et de centrage à embase (33) fixant l'adaptateur de moyeu (4) respectivement quatre goujons filetés (34) et écrous de centrage à embase (32) fixant l'adaptateur de moyeu (mode de réalisation à quatre trous).

3. Système unitaire de roue selon la revendication 1, caractérisé en ce que la face arrière (10) de la jante de roue (2) est pourvue de cinq trous oblongs (47) destinés à recevoir cinq vis d'assemblage et de centrage à embase (33) fixant l'adaptateur de moyeu (5) au moyeu d'essieu de véhicule (8) ou goujons filetés (34) montés sur le moyeu d'essieu de véhicule (8) et écrous de centrage à embase (32) pouvant être vissés sur ces derniers (mode de réalisation à cinq trous).

4. Système unitaire de roue selon l'une quelconque des revendications 1 à 3, caractérisé en ce que la face arrière (10) de la jante de roue (3) est pourvue de quatre trous oblongs (46) et de cinq autres trous oblongs (47) qui sont sur le même cercle de trous, destinés à recevoir des vis d'assemblage et de centrage à embase fixant l'adaptateur de moyeu (5) au moyeu d'essieu de véhicule (8) respectivement des goujons filetés (34) montés sur le moyeu d'essieu de véhicule (8) et écrous de centrage à embase (32).

5. Système unitaire de roue selon l'une quelconque des revendications précédentes, caractérisé en ce que la partie cylindrique (17) s'étendant à travers la jante de roue (1, 2, 3) de l'adaptateur de moyeu (4, 5) est un cylindre creux sur lequel l'écrou de verrouillage central (13) peut être vissé et dont l'extrémité arrière est élargie en cône pour entourer le chapeau de graisse (9) du moyeu d'essieu de véhicule (8) et présente une bride de fixation (16) et dont l'extrémité avant possède un diamètre extérieur qui correspond sensiblement au diamètre intérieur de l'alésage central de jante de roue (48) à travers lequel s'étend l'adaptateur de moyeu.

6. Système unitaire de roue selon l'une quelconque des revendications 1 à 4, caractérisé en ce que la partie cylindrique (20) s'étendant à travers la jante de roue de l'adaptateur de moyeu (15) s'amincit à son extrémité avant en tenon sur lequel peut être vissé l'écrou de verrouillage central (21) qui s'applique sur un disque (23) logé dans l'ouverture de l'alésage de jante de roue (48) et en ce qu'un cône (19) allant en s'élargissant dans la direction de l'extrémité arrière de l'adaptateur de moyeu (15) se raccorde à l'extrémité avant en forme de tenon, qui entoure le chapeau de graisse (9) et porte une bride de fixation (18).

7. Système unitaire de roue pour véhicules routiers, en particulier pour automobiles, comprenant une jante de roue (49), en particulier en métal léger, présentant un ou plusieurs trous (51) disposés en cercle et comprenant un adaptateur de moyeu (29) présentant un alésage central ouvert au moins dans la direction du moyeu d'essieu de véhicule (8) par l'intermédiaire duquel la jante de roue (49) peut être fixée au moyeu d'essieu de roue respectivement au disque de frein ou au tambour de frein (8) au moyen de plusieurs éléments de centrage (36) et d'au moins deux boulons à tête fraisée (30), caractérisé en ce que les trous prévus dans la jante de roue (49) sont des trous oblongs (51) et en ce qu'un espace intermédiaire est prévu entre la périphérie du moyeu d'essieu et l'alésage central de l'adaptateur de moyeu (29) qui peut être rempli par une bague d'espacement (12).

8. Système unitaire de roue selon la revendication 7, caractérisé en ce que la jante de roue (49) est pourvue sur sa face avant (11) de cinq trous de traversée (31) destinés à cinq boulons à tête fraisée (30) et sur sa face arrière (10) de cinq trous borgnes oblongs (51) destinés à des vis d'assemblage et de centrage à embase (36).

9. Système unitaire de roue pour véhicules routiers, en particulier pour automobiles, comprenant une jante de roue (50), en particulier en métal léger, et comprenant un adaptateur de moyeu (39) qui peut être monté sur le moyeu d'essieu du véhicule respectivement sur le disque de frein ou le tambour de frein au moyen d'un assemblage par vissage (43) et d'au moins un élément de centrage (44), caractérisé en ce que l'adaptateur de moyeu (39) peut être introduit par la face avant (11) de la jante de roue (50) dans l'ouverture centrale (53) de la jante de roue (50), peut être positionné dans cette ouverture avec un goujon d'assemblage (44) servant d'élément de centrage et peut être fixé par vissage à l'aide d'au moins deux boulons à tête fraisée (43) qui s'étendent à travers des ouvertures (45) de l'adaptateur de moyeu (39) et en ce qu'une bague d'espacement (12), qui a pour siège l'ouverture de l'adaptateur de moyeu, est disposée entre la périphérie du moyeu d'essieu et l'adaptateur de moyeu (39) pour adapter le diamètre intérieur de l'ouverture centrale arrière de l'adaptateur de moyeu à différentes fusée d'essieu.

10. Système unitaire de roue selon la revendication 9, caractérisé en ce que l'adaptateur de moyeu (39) présente sur sa face avant une bride (54) qui peut être introduite dans un creux (55) correspondant du moyeu de jante de roue (56).

11. Système unitaire de roue selon la revendication 9 ou 10, caractérisé en ce que l'adaptateur de moyeu (39) est pourvu de cinq alésages de traversée (40) disposés en cercle destinés à recevoir des boulons à tête fraisée (43) ainsi que de cinq alésages de traversée (41) disposés en cercle destinés à recevoir des goujons d'assemblage (44).

12. Système unitaire de roue selon l'une quelconque des revendications 1 à 11, caractérisé en ce que la bague d'espacement (12) est en matière plastique.

13. Système unitaire de roue selon l'une quelconque des revendications 1 à 11, caractérisé en ce que la bague d'espacement (12) est en métal.
